# EUROPEAN PATENT APPLICATION

(11) **EP 4 625 848 A1**
(43) Date of publication of application: **01.10.2025**
(21) Application number: 23923253.1
(22) Date of filing: 20.02.2023
(51) Int. Cl.: H04B 10/90

(54) **COMMUNICATION APPARATUS AND SIGNAL TRANSMISSION METHOD**

(71) Applicant: Huawei Technologies Co., Ltd., Shenzhen, Guangdong 518129 (CN)
(72) Inventor: LI, Oupeng, Shenzhen, Guangdong 518129 (CN)
(74) Representative: Goddar, Heinz J.
(86) International application number: PCT/CN2023/077203
(87) International publication number: WO 2024/174067

(57) **Abstract**

A communication apparatus and a signal transmission method are provided. The communication apparatus includes a baseband processing unit, a transmitting unit, a receiving unit, and a loopback path between the transmitting unit and the receiving unit. The loopback path may be switched between a disconnected state and a connected state. When the baseband processing unit generates a communication signal, the loopback path is in a disconnected state, to implement communication with another apparatus. When the baseband processing unit generates a sensing signal, the loopback path is in a connected state, to sense a to-be-detected object (for example, determine a type and a physical structure form of the to-be-detected object, or determine a distance from the to-be-detected object). The communication apparatus provided in this application can communicate with another communication apparatus by using a signal within a frequency band (for example, a terahertz wave signal or a millimeter wave signal), and can further sense the to-be-detected object by using a signal within the frequency band. This improves use efficiency of the communication apparatus.

## Description

### TECHNICAL FIELD

This application relates to the communication field, and more specifically, to a communication apparatus and a signal transmission method.

### BACKGROUND

With advancement of research on a wireless communication system, an operating frequency of the wireless system is increasingly high. Currently, a 5th-generation mobile communication technology (5th-Generation Mobile Communication Technology, 5G) has covered a millimeter wave frequency band, and research and utilization on terahertz wave signals have been started in 6G pre-research. In current applications of the terahertz wave signals, the principle of large bandwidth characteristic of the terahertz wave signals is utilized to implement long-range or short-range wireless communication with other electronic devices. Alternatively, the terahertz wave signals are employed for sensing objects, for example, performing substance detection and identification based on different absorption rates of substances for terahertz wave signals within different frequency bands, measuring distances from objects and determining physical structure forms of objects based on timing of terahertz wave signals reflected by the objects, and the like.

However, in current technologies, a communication architecture (also referred to as a communication apparatus) for communication by using terahertz wave signals cannot be used for sensing objects, while a communication architecture (communication apparatus) for sensing objects by using terahertz wave signals cannot be used for communication. In other words, the communication architecture for sensing objects by using terahertz wave signals and the communication architecture for communication by using terahertz wave signals are separate communication architectures. Consequently, this results in limited functions and reduced use efficiency for the communication architectures. When an electronic device needs to perform structure sensing and communication on objects by using terahertz wave signals, two different communication architectures need to be integrated into the electronic device, bringing high costs and complex implementation to the electronic device, further compromising use efficiency of the electronic device.

### SUMMARY

This application provides a communication apparatus and a signal transmission method. The communication apparatus can communicate with another communication apparatus by utilizing signals within a frequency band (for example, terahertz wave signals or millimeter wave signals), and additionally, sense a to-be-detected object by utilizing signals within the frequency band, for example, determine a type and a physical structure form of the to-be-detected object, determine a distance from the to-be-detected object, and the like. In other words, the same communication apparatus can implement both communication and sensing by utilizing signals within the frequency band. This improves use efficiency of the communication apparatus. In addition, a structure of the communication apparatus is simple and easy to implement.

According to a first aspect, a communication apparatus is provided. The communication apparatus includes a baseband processing unit, a transmitting unit, a receiving unit, and a loopback path.

The baseband processing unit is configured to: generate a communication signal or a sensing signal, and transmit the communication signal or the sensing signal to the transmitting unit.

When a signal generated by the baseband processing unit is a communication signal, the transmitting unit is configured to: modulate the communication signal to a first frequency band wave signal, and send the first frequency band wave signal.

Alternatively, when a signal generated by the baseband processing unit is a sensing signal, the transmitting unit is configured to: modulate the sensing signal to a second frequency band wave signal, transmit a first part of the second frequency band wave signal to a first to-be-detected object, and send a second part of the second frequency band wave signal to the receiving unit through the loopback path; and the receiving unit is configured to: receive the second frequency band wave signal reflected by the first to-be-detected object and the second part of the second frequency band wave signal, and transmit, to the baseband processing unit, the second frequency band wave signal reflected by the first to-be-detected object and the second part of the second frequency band wave signal, or transmit, to the baseband processing unit, a signal obtained by processing the second frequency band wave signal reflected by the first to-be-detected object and the second part of the second frequency band wave signal.

The baseband processing unit is further configured to perform distance measurement and/or physical structure form sensing on the first to-be-detected object based on at least one of the following:
the second frequency band wave signal reflected by the first to-be-detected object and the second part of the second frequency band wave signal, or the signal obtained by processing the second frequency band wave signal reflected by the first to-be-detected object and the second part of the second frequency band wave signal.

According to the communication apparatus provided in first aspect, the baseband processing unit generates the communication signal or the sensing signal, the transmitting unit modulates the communication signal or the sensing signal into a terahertz wave signal at a different frequency and sends the terahertz wave signal, and an optional loopback path is disposed between the transmitting unit and the receiving unit. In a communication mode, the loopback path is in a disconnected state, and the transmitting unit modulates the communication signal to the first frequency band wave signal at a fixed frequency (for example, a first terahertz wave signal) and sends the signal, to implement communication with another communication apparatus. In a sensing mode, the loopback path is in a connected state, and the transmitting unit modulates the sensing signal to the wide-band second frequency band wave signal (for example, a second terahertz wave signal) and sends the signal. The receiving unit receives the terahertz wave signal transmitted on the loopback path and the terahertz wave signal reflected by the to-be-detected object, and the baseband processing unit processes the terahertz wave signal transmitted on the loopback path and the terahertz wave signal reflected by the to-be-detected object, to sense the to-be-detected object (perform distance measurement and/or physical structure form sensing on the to-be-detected object). In other words, in the communication apparatus, communication and sensing can be performed by utilizing the terahertz wave signals. This improves use efficiency of the terahertz wave signal and the communication apparatus. In addition, a structure of the communication apparatus is simple, and is easy to be implemented, so that costs of the communication apparatus can be reduced.

For example, the physical structure form of the to-be-detected object may be understood as a physical outline of the to-be-detected object. For example, the outline of the to-be-detected object may be a cuboid, a cube, a sphere, or another irregular shape.

In a possible implementation of the first aspect, the communication apparatus further includes a depth of field camera, an MEMS gyroscope, and the like, to sense the physical structure form of the to-be-detected object.

In a possible implementation of the first aspect or the second aspect, the first frequency band wave signal and the second frequency band wave signal each may be a terahertz wave signal or a millimeter wave signal.

In a possible implementation of the first aspect, the first frequency band wave signal may be the first terahertz wave signal, and the first terahertz wave signal may be a terahertz wave signal at a fixed frequency (a fixed frequency). For example, a frequency of the first terahertz wave signal may be a first frequency. The second frequency band wave signal may be the second terahertz wave signal, a frequency of the second terahertz wave signal may change with time, and the frequency of the second terahertz wave signal may belong to a wide frequency range.

In a possible implementation of the first aspect, when the signal generated by the baseband processing unit is a communication signal, the loopback path is in a disconnected state, that is, a signal cannot be transmitted between the transmitting unit and the receiving unit. When the signal generated by the baseband processing unit is a sensing signal, the loopback path is in a connected state, that is, a terahertz wave signal may be transmitted between the transmitting unit and the receiving unit through the loopback path.

In a possible implementation of the first aspect, the communication apparatus may further include a transmit antenna and a receive antenna. The transmit antenna is connected to the transmitting unit, and is configured to transmit the first terahertz wave signal or the second terahertz wave signal. The receive antenna is connected to the receiving unit, and is configured to receive the second terahertz wave signal reflected by the to-be-detected object, or receive a terahertz wave signal sent by another communication apparatus, and transmit the received terahertz wave signal to the receiving unit. Optionally, the transmit antenna may alternatively be integrated into the transmitting unit, that is, the transmitting unit includes the transmit antenna. The receive antenna may alternatively be integrated into the receiving unit, that is, the receiving unit includes the receive antenna.

In a possible implementation of the first aspect, the transmitting unit includes a bias circuit, a tuning circuit, and an oscillation circuit, and both the bias circuit and the tuning circuit are connected to the oscillation circuit. In this implementation, the bias circuit controls the oscillation circuit to be on or off, and the tuning circuit configures a frequency of a terahertz wave signal output by the oscillation circuit, so that the transmitting unit can generate signals within different frequency bands (for example, the first terahertz wave signal and the second terahertz wave signal). In this way, a communication function and a sensing function of the communication apparatus are implemented.

In a possible implementation of the first aspect, when the signal generated by the baseband processing unit is a communication signal, the tuning circuit is configured to configure a frequency of the oscillation circuit to the first frequency, where the first frequency is a frequency of the first frequency band wave signal; the bias circuit is configured to: receive the communication signal, and transmit the communication signal to the oscillation circuit; and the oscillation circuit is configured to: modulate the communication signal to the first frequency band wave signal, and send the first frequency band wave signal. In this implementation, the tuning circuit is configured to configure the oscillation circuit to output a terahertz wave signal at a fixed frequency, and the bias circuit is configured to feed the communication signal (for example, a baseband symbol signal) into the oscillation circuit, to implement a cycle between being in an on state and being in an off state of the oscillation circuit, so that the communication signal is modulated to the terahertz wave signal, to implement a communication function of the apparatus. This structure is simple, and is easy to be implemented.

In a possible implementation of the first aspect, when the signal generated by the baseband processing unit is a sensing signal, the bias circuit is configured to control the oscillation circuit to be in an on state; the tuning circuit is configured to receive the sensing signal; and the oscillation circuit is configured to: modulate the sensing signal to the second frequency band wave signal, and send the second frequency band wave signal, where a frequency range of the second frequency band wave signal is a second frequency range. In this implementation, the tuning circuit is configured to configure the oscillation circuit to output a wide-band terahertz wave signal at a variable frequency, and the tuning circuit is configured to feed the sensing signal (for example, a sawtooth wave voltage signal) into the oscillation circuit, so that the communication signal is modulated to the terahertz wave signal, to implement a sensing function (for example, distance measurement, determining a type of the to-be-detected object, and determining physical structure form sensing of the to-be-detected object) of the communication apparatus on the to-be-detected object. This structure is simple, and is easy to be implemented.

In a possible implementation of the first aspect, the oscillation circuit includes a resonant tunneling diode RTD, the tuning circuit includes multiple varactor diodes connected in parallel to the RTD, and the RTD and the multiple varactor diodes are configured to modulate the sensing signal to the second frequency band wave signal. In this implementation, the communication apparatus can output a wide-band signal at a terahertz frequency level. In this way, the communication apparatus can sense a structure and a spectrum of the to-be-detected object.

In a possible implementation of the first aspect, the loopback path includes a spoof surface plasmon polariton SSPP transmission line and/or a grounded coplanar waveguide CPWG transmission line. In this implementation, a part of an electromagnetic wave signal at a terahertz frequency level may be transmitted in the communication apparatus, and another part of the electromagnetic wave is distributed in space. The to-be-detected object absorbs the part of the electromagnetic wave distributed in the space, a frequency absorption response may be performed on the to-be-detected object on the loopback path, to implement spectrum sensing on the to-be-detected object.

In a possible implementation of the first aspect, at least a part of the loopback path is exposed to a surface of the communication apparatus. In this implementation, the to-be-detected object can be conveniently placed on the loopback path, to respond to terahertz wave signal absorption of the to-be-detected object on the loopback path, so as to determine a type or an attribute of the to-be-detected object.

In a possible implementation of the first aspect, the receiving unit includes a Schottky diode frequency mixer and/or a wave detector.

In a possible implementation of the first aspect, the sensing signal includes a voltage signal and/or a current signal, and the communication signal includes a baseband symbol signal.

According to a second aspect, a communication apparatus is provided. The communication apparatus includes a baseband processing unit, a transmitting unit, a receiving unit, and a loopback path.

The baseband processing unit is configured to: generate a communication signal or a sensing signal, and transmit the communication signal or the sensing signal to the transmitting unit.

When a signal generated by the baseband processing unit is a communication signal, the transmitting unit is configured to: modulate the communication signal to a first frequency band wave signal, and send the first frequency band wave signal.

Alternatively, when a signal generated by the baseband processing unit is a sensing signal, the transmitting unit is configured to: when there is no to-be-detected object placed on the loopback path, modulate the sensing signal to a first signal, and send the first signal to the receiving unit through the loopback path; and is further configured to: when there is a to-be-detected object placed on the loopback path, modulate the sensing signal to a second signal, and send the second signal to the receiving unit through the loopback path, where the first signal and the second signal each are a second frequency band wave signal; and the receiving unit is configured to: receive the first signal and the second signal that are transmitted through the loopback path, and transmit the first signal and the second signal to the baseband processing unit, or transmit, to the baseband processing unit, signals obtained through respective processing on the first signal and the second signal.

The baseband processing unit is further configured to determine a substance type of the to-be-detected object based on at least one of the following:
the first signal and the second signal, or the signals obtained through respective processing on the first signal and the second signal.

According to the communication apparatus provided in second aspect, the baseband processing unit generates the communication signal or the sensing signal, the transmitting unit modulates the communication signal or the sensing signal into a terahertz wave signal at a different frequency and sends the terahertz wave signal, and an optional loopback path is disposed between the transmitting unit and the receiving unit. In a communication mode, the loopback path is in a disconnected state, and the transmitting unit modulates the communication signal to the first frequency band wave signal at a fixed frequency (for example, a first terahertz wave signal) and sends the signal, to implement communication with another communication apparatus. In a sensing mode, the loopback path is in a connected state, the transmitting unit modulates the sensing signal into the wide-band second frequency band wave signal (for example, a second terahertz wave signal), and transmits the signal to the receiving unit through the loopback path, and an absorption spectrum of the second terahertz wave signal existing when the to-be-detected object is not loaded on the loopback path and an absorption spectrum of the second terahertz wave signal existing when the to-be-detected object is loaded on the loopback path are determined (in other words, spectrum sensing is performed), so that a frequency of an absorption peak, an amplitude of the absorption peak, and the like of the to-be-detected object for the second terahertz wave signal can be determined. In this way, a type or a substance attribute of the to-be-detected object can be determined, to implement a sensing function of the apparatus. This structure is simple, and is easy to be implemented, so that costs of the communication apparatus can be reduced.

For example, the type of the to-be-detected object may be understood as a substance attribute of the to-be-detected object, for example, a type of polymer material, a bioprotein, or a semiconductor material to which the to-be-detected object belongs.

In a possible implementation of the second aspect, the baseband processing unit is further configured to: determine, based on the first signal and the second signal or the signals obtained through respective processing on the first signal and the second signal, a frequency and a peak of an absorption peak of the to-be-detected object for the second signal (that is, implement spectrum sensing); and determine the type of the to-be-detected object based on the frequency and the peak of the absorption peak for the second signal.

In a possible implementation of the second aspect, the first frequency band wave signal and the second frequency band wave signal each may be a terahertz wave signal or a millimeter wave signal.

In a possible implementation of the second aspect, the first frequency band wave signal may be the first terahertz wave signal, and the first terahertz wave signal may be a terahertz wave signal at a fixed frequency (a fixed frequency). For example, a frequency of the first terahertz wave signal may be a first frequency. The second frequency band wave signal may be the second terahertz wave signal, a frequency of the second terahertz wave signal may change with time, and the frequency of the second terahertz wave signal may belong to a wide frequency range.

In a possible implementation of the second aspect, when the signal generated by the baseband processing unit is a communication signal, the loopback path is in a disconnected state, that is, a signal cannot be transmitted between the transmitting unit and the receiving unit. When the signal generated by the baseband processing unit is a sensing signal, the loopback path is in a connected state, that is, a terahertz wave signal may be transmitted between the transmitting unit and the receiving unit through the loopback path.

In a possible implementation of the second aspect, the communication apparatus may further include a transmit antenna and a receive antenna. The transmit antenna is connected to the transmitting unit, and is configured to transmit the first terahertz wave signal or the second terahertz wave signal. The receive antenna is connected to the receiving unit, and is configured to receive the second terahertz wave signal reflected by the to-be-detected object, or receive a terahertz wave signal sent by another communication apparatus, and transmit the received terahertz wave signal to the receiving unit. Optionally, the transmit antenna may alternatively be integrated into the transmitting unit, that is, the transmitting unit includes the transmit antenna. The receive antenna may alternatively be integrated into the receiving unit, that is, the receiving unit includes the receive antenna.

In a possible implementation of the second aspect, the transmitting unit includes a bias circuit, a tuning circuit, and an oscillation circuit, and both the bias circuit and the tuning circuit are connected to the oscillation circuit. In this implementation, the bias circuit controls the oscillation circuit to be on or off, and the tuning circuit configures a frequency of a terahertz wave signal output by the oscillation circuit, so that the transmitting unit can generate signals within different frequency bands (for example, the first terahertz wave signal and the second terahertz wave signal). In this way, a communication function and a sensing function of the communication apparatus are implemented.

In a possible implementation of the second aspect, when the signal generated by the baseband processing unit is a communication signal, the tuning circuit is configured to configure a frequency of the oscillation circuit to the first frequency, where the first frequency is a frequency of the first frequency band wave signal; the bias circuit is configured to: receive the communication signal, and transmit the communication signal to the oscillation circuit; and the oscillation circuit is configured to: modulate the communication signal to the first frequency band wave signal, and send the first frequency band wave signal. In this implementation, the tuning circuit is configured to configure the oscillation circuit to output a terahertz wave signal at a fixed frequency, and the bias circuit is configured to feed the communication signal (for example, a baseband symbol signal) into the oscillation circuit, to implement a cycle between being in an on state and being in an off state of the oscillation circuit, so that the communication signal is modulated to the terahertz wave signal, to implement a communication function of the apparatus. This structure is simple, and is easy to be implemented.

In a possible implementation of the second aspect, when the signal generated by the baseband processing unit is a sensing signal, the bias circuit is configured to control the oscillation circuit to be in an on state; the tuning circuit is configured to receive the sensing signal; and the oscillation circuit is configured to: modulate the sensing signal to the second frequency band wave signal, and send the second frequency band wave signal, where a frequency range of the second frequency band wave signal is a second frequency range. In this implementation, the tuning circuit is configured to configure the oscillation circuit to output a wide-band terahertz wave signal at a variable frequency, and the tuning circuit is configured to feed the sensing signal (for example, a sawtooth wave voltage signal) into the oscillation circuit, so that the communication signal is modulated to the terahertz wave signal, to implement a sensing function (for example, distance measurement, determining a type of the to-be-detected object, and determining physical structure form sensing of the to-be-detected object) of the communication apparatus on the to-be-detected object. This structure is simple, and is easy to be implemented.

In a possible implementation of the second aspect, the oscillation circuit includes a resonant tunneling diode RTD, the tuning circuit includes multiple varactor diodes connected in parallel to the RTD, and the RTD and the multiple varactor diodes are configured to modulate the sensing signal to the second frequency band wave signal. In this implementation, the communication apparatus can output a wide-band signal at a terahertz frequency level. In this way, the communication apparatus can sense a structure and a spectrum of the to-be-detected object.

In a possible implementation of the second aspect, the loopback path includes a spoof surface plasmon polariton SSPP transmission line and/or a grounded coplanar waveguide CPWG transmission line. In this implementation, a part of an electromagnetic wave signal at a terahertz frequency level may be transmitted in the communication apparatus, and another part of the electromagnetic wave is distributed in space. The to-be-detected object absorbs the part of the electromagnetic wave distributed in the space, a frequency absorption response may be performed on the to-be-detected object on the loopback path, to implement spectrum sensing on the to-be-detected object.

In a possible implementation of the second aspect, at least a part of the loopback path is exposed to a surface of the communication apparatus. In this implementation, the to-be-detected object can be conveniently placed on the loopback path, to respond to terahertz wave signal absorption of the to-be-detected object on the loopback path, so as to determine a type or an attribute of the to-be-detected object.

In a possible implementation of the second aspect, the receiving unit includes a Schottky diode frequency mixer and/or a wave detector.

In a possible implementation of the second aspect, the sensing signal includes a voltage signal and/or a current signal, and the communication signal includes a baseband symbol signal.

According to a third aspect, a signal transmission method is provided. The method may be applied to the communication apparatus according to any one of the first aspect or the possible implementations of the first aspect. The method includes: A baseband processing unit generates a communication signal or a sensing signal, and transmits the communication signal or the sensing signal to a transmitting unit;
when a signal generated by the baseband processing unit is a communication signal, the transmitting unit modulates the communication signal to a first frequency band wave signal, and sends the first frequency band wave signal; or
when a signal generated by the baseband processing unit is a sensing signal, the transmitting unit modulates the sensing signal to a second frequency band wave signal, transmits a first part of the second frequency band wave signal to a first to-be-detected object, and sends a second part of the second frequency band wave signal to a receiving unit through a loopback path; and the receiving unit receives the second frequency band wave signal reflected by the first to-be-detected object and the second part of the second frequency band wave signal, and transmits, to the baseband processing unit, the second frequency band wave signal reflected by the first to-be-detected object and the second part of the second frequency band wave signal, or transmits, to the baseband processing unit, a signal obtained by processing the second frequency band wave signal reflected by the first to-be-detected object and the second part of the second frequency band wave signal; and
the baseband processing unit performs distance measurement and/or physical structure form sensing on the first to-be-detected object based on at least one of the following:
   the second frequency band wave signal reflected by the first to-be-detected object and the second part of the second frequency band wave signal, or the signal obtained by processing the second frequency band wave signal reflected by the first to-be-detected object and the second part of the second frequency band wave signal.

According to the signal transmission method provided in the third aspect, the baseband processing unit generates the communication signal or the sensing signal, the transmitting unit modulates the communication signal or the sensing signal into a terahertz wave signal at a different frequency and sends the terahertz wave signal, and an optional loopback path is disposed between the transmitting unit and the receiving unit. In a communication mode, the loopback path is in a disconnected state, and the transmitting unit modulates the communication signal to the first frequency band wave signal at a fixed frequency (for example, a first terahertz wave signal) and sends the signal, to implement communication with another communication apparatus. In a sensing mode, the loopback path is in a connected state, and the transmitting unit modulates the sensing signal to the wide-band second frequency band wave signal (for example, a second terahertz wave signal) and sends the signal. The receiving unit receives the terahertz wave signal transmitted on the loopback path and the terahertz wave signal reflected by the to-be-detected object, and the baseband processing unit processes the terahertz wave signal transmitted on the loopback path and the terahertz wave signal reflected by the to-be-detected object, to sense the to-be-detected object (perform distance measurement and/or physical structure form sensing on the to-be-detected object). In other words, in a same communication apparatus, communication and sensing are performed by using terahertz wave signals, so that use efficiency of the terahertz wave signal is improved.

In a possible implementation of the third aspect, the transmitting unit includes a bias circuit, a tuning circuit, and an oscillation circuit, and both the bias circuit and the tuning circuit are connected to the oscillation circuit. In this implementation, the bias circuit controls the oscillation circuit to be on or off, and the tuning circuit configures a frequency of a terahertz wave signal output by the oscillation circuit, so that the transmitting unit can generate signals within different frequency bands (for example, the first terahertz wave signal and the second terahertz wave signal). In this way, a communication function and a sensing function of the communication apparatus are implemented.

In a possible implementation of the third aspect, when the signal generated by the baseband processing unit is a communication signal, the method further includes:

The tuning circuit configures a frequency of the oscillation circuit to a first frequency, where the first frequency is a frequency of the first frequency band wave signal;
the bias circuit receives the communication signal, and transmitting the communication signal to the oscillation circuit; and
the oscillation circuit modulates the communication signal to the first frequency band wave signal, and sending the first frequency band wave signal.

In a possible implementation of the third aspect, when the signal generated by the baseband processing unit is a sensing signal, the method further includes:

The bias circuit controls the oscillation circuit to be in an on state;
the tuning circuit receives the sensing signal; and
the oscillation circuit modulates the sensing signal to the second frequency band wave signal, and sends the second frequency band wave signal, where a frequency range of the second frequency band wave signal is a second frequency range.

In a possible implementation of the third aspect, the oscillation circuit includes a resonant tunneling diode RTD, the tuning circuit includes multiple varactor diodes connected in parallel to the RTD, and the RTD and the multiple varactor diodes modulate the sensing signal to the second frequency band wave signal.

In a possible implementation of the third aspect, the loopback path includes a spoof surface plasmon polariton SSPP transmission line and/or a grounded coplanar waveguide CPWG transmission line.

In a possible implementation of the third aspect, at least a part of the loopback path is exposed to a surface of the communication apparatus.

In a possible implementation of the third aspect, the receiving unit includes a Schottky diode frequency mixer and/or a wave detector.

In a possible implementation of the third aspect, the first frequency band wave signal is a terahertz band signal and/or the second frequency band wave signal is a terahertz band signal.

In a possible implementation of the third aspect, the sensing signal includes a voltage signal and/or a current signal, and the communication signal includes a baseband symbol signal.

For beneficial effects of any possible implementation of the third aspect, refer to descriptions of beneficial effects of the corresponding implementation of the first aspect.

According to a fourth aspect, a signal transmission method is provided. The method may be applied to the communication apparatus according to any one of the second aspect or the possible implementations of the second aspect. The method includes: A baseband processing unit generates a communication signal or a sensing signal, and transmits the communication signal or the sensing signal to a transmitting unit;
when a signal generated by the baseband processing unit is a communication signal, the transmitting unit modulates the communication signal to a first frequency band wave signal, and sends the first frequency band wave signal; or
when a signal generated by the baseband processing unit is a sensing signal, when there is no to-be-detected object placed on a loopback path, the transmitting unit modulates the sensing signal to a first signal, and sends the first signal to a receiving unit through the loopback path; when there is a to-be-detected object placed on the loopback path, the transmitting unit modulates the sensing signal to a second signal, and sends the second signal to the receiving unit through the loopback path, where the first signal and the second signal each are a second frequency band wave signal; and the receiving unit receives the first signal and the second signal that are transmitted through the loopback path, and transmits the first signal and the second signal to the baseband processing unit, or transmits, to the baseband processing unit, signals obtained through respective processing on the first signal and the second signal; and
the baseband processing unit determines a substance type of the to-be-detected object based on at least one of the following:
   the first signal and the second signal, or the signals obtained through respective processing on the first signal and the second signal.

According to the signal transmission method provided in the fourth aspect, the baseband processing unit generates the communication signal or the sensing signal, the transmitting unit modulates the communication signal or the sensing signal into a terahertz wave signal at a different frequency and sends the terahertz wave signal, and an optional loopback path is disposed between the transmitting unit and the receiving unit. In a communication mode, the loopback path is in a disconnected state, and the transmitting unit modulates the communication signal to the first frequency band wave signal at a fixed frequency (for example, a first terahertz wave signal) and sends the signal, to implement communication with another communication apparatus. In a sensing mode, the loopback path is in a connected state, the transmitting unit modulates the sensing signal into the wide-band second frequency band wave signal (for example, a second terahertz wave signal), and transmits the signal to the receiving unit through the loopback path, and an absorption spectrum of the second terahertz wave signal existing when the to-be-detected object is not loaded on the loopback path and an absorption spectrum of the second terahertz wave signal existing when the to-be-detected object is loaded on the loopback path are determined (in other words, spectrum sensing is performed), so that a frequency of an absorption peak, an amplitude of the absorption peak, and the like of the to-be-detected object for the second terahertz wave signal can be determined. In this way, a type or a substance attribute of the to-be-detected object can be determined, to implement a sensing function of the apparatus. This structure is simple, and is easy to be implemented, so that use efficiency of the terahertz wave signal is improved.

In the fourth aspect or a possible implementation, the method further includes: The baseband processing unit determines, based on the first signal and the second signal or the signals obtained through respective processing on the first signal and the second signal, a frequency and a peak of an absorption peak of the to-be-detected object for the second signal; and the baseband processing unit determines the type of the to-be-detected object based on the frequency and the peak of the absorption peak for the second signal.

In a possible implementation of the fourth aspect, the transmitting unit includes a bias circuit, a tuning circuit, and an oscillation circuit, and both the bias circuit and the tuning circuit are connected to the oscillation circuit. In this implementation, the bias circuit controls the oscillation circuit to be on or off, and the tuning circuit configures a frequency of a terahertz wave signal output by the oscillation circuit, so that the transmitting unit can generate signals within different frequency bands (for example, the first terahertz wave signal and the second terahertz wave signal). In this way, a communication function and a sensing function of the communication apparatus are implemented.

In a possible implementation of the fourth aspect, when the signal generated by the baseband processing unit is a communication signal, the method further includes:
The tuning circuit configures a frequency of the oscillation circuit to a first frequency, where the first frequency is a frequency of the first frequency band wave signal;
the bias circuit receives the communication signal, and transmitting the communication signal to the oscillation circuit; and
the oscillation circuit modulates the communication signal to the first frequency band wave signal, and sending the first frequency band wave signal.

In a possible implementation of the third aspect or the fourth aspect, when the signal generated by the baseband processing unit is a sensing signal, the method further includes:

The bias circuit controls the oscillation circuit to be in an on state;
the tuning circuit receives the sensing signal; and
the oscillation circuit modulates the sensing signal to the second frequency band wave signal, and sends the second frequency band wave signal, where a frequency range of the second frequency band wave signal is a second frequency range.

In a possible implementation of the fourth aspect, the oscillation circuit includes a resonant tunneling diode RTD, the tuning circuit includes multiple varactor diodes connected in parallel to the RTD, and the RTD and the multiple varactor diodes modulate the sensing signal to the second frequency band wave signal.

In a possible implementation of the fourth aspect, the loopback path includes a spoof surface plasmon polariton SSPP transmission line and/or a grounded coplanar waveguide CPWG transmission line.

In a possible implementation of the third aspect or the fourth aspect, at least a part of the loopback path is exposed to a surface of the communication apparatus.

In a possible implementation of the fourth aspect, the receiving unit includes a Schottky diode frequency mixer and/or a wave detector.

In a possible implementation of the fourth aspect, the first frequency band wave signal is a terahertz band signal and/or the second frequency band wave signal is a terahertz band signal.

In a possible implementation of the fourth aspect, the sensing signal includes a voltage signal and/or a current signal, and the communication signal includes a baseband symbol signal.

For beneficial effects of any possible implementation of the fourth aspect, refer to descriptions of beneficial effects of the corresponding implementation of the second aspect.

According to a fifth aspect, an electronic device is provided. The electronic device includes the communication apparatus according to any one of the first aspect or the possible implementations of the first aspect, or the communication apparatus according to any one of the second aspect or the possible implementations of the second aspect.

For example, the electronic device may be terminal devices in various forms, for example, a smartphone, a tablet computer, a notebook computer, a foldable mobile phone, a wearable device, a large-screen device, a smart television, and a head unit.

According to the electronic device provided in the fifth aspect, communication with another communication apparatus can be implemented by using a signal within a frequency band (for example, a terahertz wave signal or a millimeter wave signal), and a to-be-detected object can also be sensed by using a signal within the frequency band, for example, a type and a physical structure form of the to-be-detected object, and a distance from the to-be-detected object can be determined. In other words, communication and sensing performed by using signals within the frequency band coexist in a same electronic device. This improves use efficiency of the signal and the electronic device.

In a possible implementation of the fifth aspect, the electronic device may further include a depth of field camera and an MEMS gyroscope.

According to a sixth aspect, a computer program product is provided. The computer program product includes a computer program. When the computer program is executed by a processor, the computer program is configured to perform the method according to the third aspect, the fourth aspect, or any possible implementation of the third aspect or the fourth aspect.

According to a seventh aspect, a computer-readable storage medium is provided. The computer-readable storage medium stores a computer program. When the computer program is executed, the computer program is configured to perform the method according to the third aspect, the fourth aspect, or any possible implementation of the third aspect or the fourth aspect.

According to an eighth aspect, a chip is provided. The chip includes: a processor, configured to invoke a computer program from a memory and run the computer program, so that a communication device to which the chip is mounted performs the method according to the third aspect, the fourth aspect, or any possible implementation of the third aspect or the fourth aspect.

### BRIEF DESCRIPTION OF DRAWINGS

FIG. 1 is a diagram illustrating a structure of a communication system used in a process of performing substance detection and identification based on different absorption rates of substances for terahertz wave signals within different frequency bands;
FIG. 2 is a diagram of an absorption peak in a received terahertz wave signal in a to-be-measured object identification process;
FIG. 3 is a diagram illustrating a physical structure of a device used when communication is performed by using a terahertz wave signal;
FIG. 4 is a diagram illustrating an application scenario of a communication apparatus according to an embodiment of this application;
FIG. 5 is a diagram illustrating another application scenario of a communication apparatus according to an embodiment of this application;
FIG. 6 is a diagram illustrating a structure of a communication apparatus according to this application;
FIG. 7 is a diagram illustrating another structure of a communication apparatus according to this application;
FIG. 8 is a diagram illustrating structures of a baseband symbol signal generated by a baseband processing unit and a first terahertz wave signal obtained through modulation according to this application;
FIG. 9 is a diagram illustrating another structure of a communication apparatus according to this application;
FIG. 10 is a diagram illustrating structures of a sawtooth wave voltage signal generated by a baseband processing unit and a terahertz wave signal obtained through modulation according to this application;
FIG. 11 is a diagram illustrating a time difference obtained by performing self-coherence on a second terahertz wave signal reflected by a to-be-detected object and a second terahertz wave signal transmitted through a loopback path according to this application;
FIG. 12 is a diagram illustrating another structure of a communication apparatus according to this application;
FIG. 13 is a diagram illustrating an absorption spectrum of a second terahertz wave signal existing when a to-be-detected object is not loaded and an absorption spectrum of the second terahertz wave signal existing when the to-be-detected object is loaded according to this application;
FIG. 14 is a diagram illustrating a structure of an electronic device (for example, a mobile phone) according to this application;
FIG. 15 is a diagram of an example in which an electronic device (for example, a mobile phone) is used to determine a distance between a to-be-detected object and the electronic device and/or a physical structure form of the to-be-detected object according to this application;
FIG. 16 is a diagram illustrating another structure of an electronic device (for example, a personal computer) according to this application;
FIG. 17 is a diagram illustrating another structure of an electronic device (for example, a personal computer) according to this application;
FIG. 18 is a diagram illustrating a structure of a transmitting unit in a communication apparatus according to this application;
FIG. 19 is a top view illustrating a double-sided comb SSPP transmission line according to this application;
FIG. 20 is a diagram illustrating an electromagnetic field distribution of a cross section of an SSPP transmission line according to this application;
FIG. 21 is a diagram illustrating an electromagnetic field distribution of a CPCW according to this application;
FIG. 22 is a diagram illustrating an application scenario of implementing virtual aperture imaging by using an electronic device according to this application; and
FIG. 23 is a schematic flowchart illustrating implementing virtual aperture imaging by using an electronic device according to this application.

### DESCRIPTION OF EMBODIMENTS

The following describes technical solutions of this application with reference to accompanying drawings.

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions in embodiments of this application, "multiple" means two or more.

The terms "first" and "second" mentioned below are merely intended for an objective of description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "multiple" means two or more.

In a broad sense, terahertz (terahertz, THz) waves are electromagnetic waves in the frequency range between 100 GHz and 10 THz. The spectrum of terahertz signals has its unique radiation characteristics: 1. Penetrability: The terahertz wave signal can penetrate different media at different attenuation rates. The atmosphere has a complex absorption effect on the terahertz wave signal. 2. Resolution: Imaging resolution increases as a wavelength of an electromagnetic wave signal decreases. In this case, because a wavelength of the terahertz wave signal is shorter, imaging resolution obtained by using the terahertz wave signal is better than imaging resolution obtained by using a microwave signal. 3. Spectroscopy characteristic: Different solid materials and gas materials have different spectral characteristics for 0.5 THz to 3 THz terahertz wave signals. Resonance frequencies of many bioproteins and nanostructures and electrons in semiconductors also fall in a terahertz band. Therefore, the terahertz wave signal may be used to perform material detection, for example, determine a microstructure and a spectrum characteristic of a material. 4. Non-ionization: Photon energy of the terahertz wave signal is low, and an ionization effect of an object is not excited. Therefore, application of the terahertz wave signal is safe.

With advancement of research on a wireless communication system, 5G has covered a millimeter wave frequency band currently. In 5G+ and 6G eras, research on terahertz wave signals is bound to be carried out, and is commercialized in communication and sensing systems by using the unique characteristics of the terahertz wave signals. In current applications of the terahertz wave signals, the principle of large bandwidth characteristic of the terahertz wave signals is utilized to implement long-range or short-range wireless communication. Additionally, the terahertz wave signals are employed for sensing objects, for example, utilizing a femtosecond laser to generate a wide-band terahertz wave time domain pulse, and performing substance detection and identification based on different absorption rates of substances for terahertz wave signals within different frequency bands; or measuring distances from objects and determining physical structure forms of objects based on timing of the terahertz wave signals reflected by the objects.

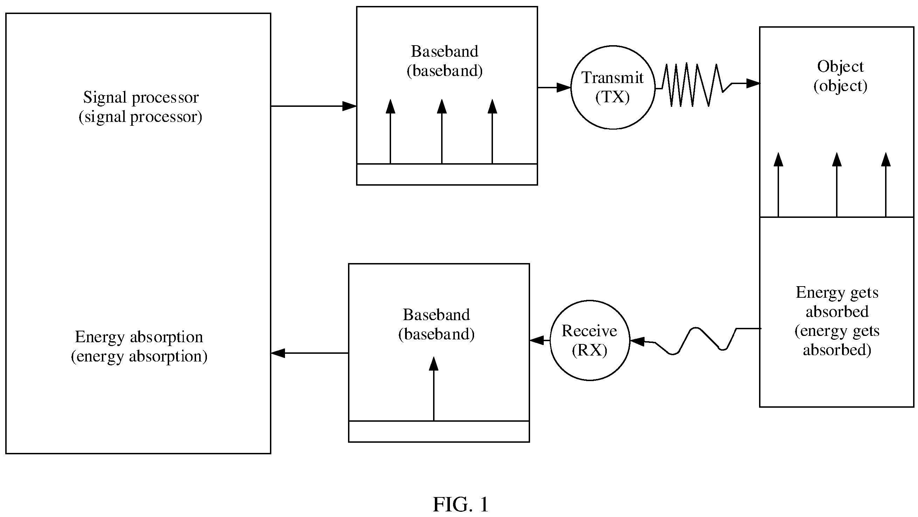

FIG. 1 is a diagram illustrating a structure of a communication system used in a process of performing substance detection and identification based on different absorption rates of substances for terahertz wave signals within different frequency bands. As shown in FIG. 1, a signal processor (signal processor) generates a signal, and modulates a frequency of the signal to a frequency of a terahertz wave signal by using a baseband (baseband). Then, the terahertz wave signal passes through a to-be-detected object (object) through space radiation. And then, the signal processor receives an echo signal (also a terahertz wave signal) reflected by the to-be-detected object (for example, bioproteins, or a nanostructure material and electrons in a semiconductor). Energy of the terahertz wave signal gets absorbed by the to-be-detected object, and the absorption of terahertz wave signals of different frequencies by the to-be-detected object varies, exhibiting specific absorption peaks. Therefore, the to-be-detected object can be identified by determining absorption peaks in an echo signal, for example, a type of the to-be-detected object is determined.

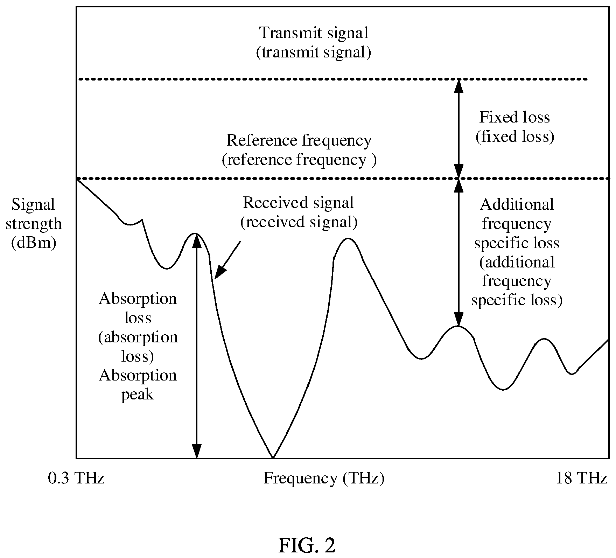

For example, FIG. 2 is a diagram of an absorption peak in a terahertz wave signal received in a to-be-measured object identification process performed by utilizing the system shown in FIG. 1. The type of the to-be-detected object may be determined by determining the absorption peaks in the echo signal.

In the solution shown in FIG. 1, the manner of performing sensing by modulating the terahertz wave signal via wideband frequency modulation and detecting the absorption peak reflected by the to-be-detected object can only detect the type of the to-be-detected object, but cannot sense a physical structure form of the to-be-detected object, and a function of communication with another terminal device cannot be implemented.

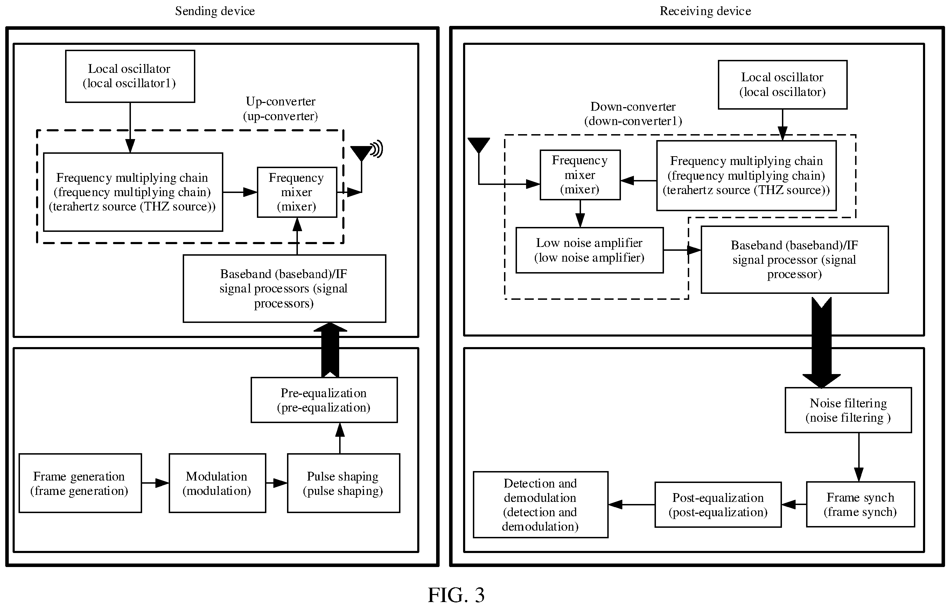

FIG. 3 is a diagram illustrating another physical structure of a device used when communication is performed by using a terahertz wave signal. In the solution shown in FIG. 3, on a sending device side, a superheterodyne architecture is utilized to convert an intermediate frequency signal into a terahertz wave signal, and the terahertz wave signal is transmitted through an antenna. On a receiving device side, after receiving the hertz wave signal, the hertz wave signal is converted into the intermediate frequency signal by using a frequency mixer, and then the intermediate frequency signal enters a data processing unit, so that two devices communicate with each other by using the terahertz wave signal. However, the structure shown in FIG. 3 is complex, and in the architecture shown in FIG. 3, the terahertz wave signal cannot be used for sensing an object, for example, determining a type and a physical structure form of the object, and determining a distance from the object.

In view of this, this application provides a communication apparatus. The communication apparatus can communicate with another communication apparatus by utilizing a signal within a frequency band (for example, a terahertz wave signal or a millimeter wave signal), and can also sense a to-be-detected object by utilizing a signal within the frequency band, for example, determine a type and a physical structure form of the to-be-detected object, and a distance from the to-be-detected object. In other words, in a same communication apparatus, communication and sensing performed by utilizing the signals within the frequency band coexist. This improves use efficiency of the signal and the communication apparatus. In addition, a structure of the communication apparatus is simple, and is easy to be implemented.

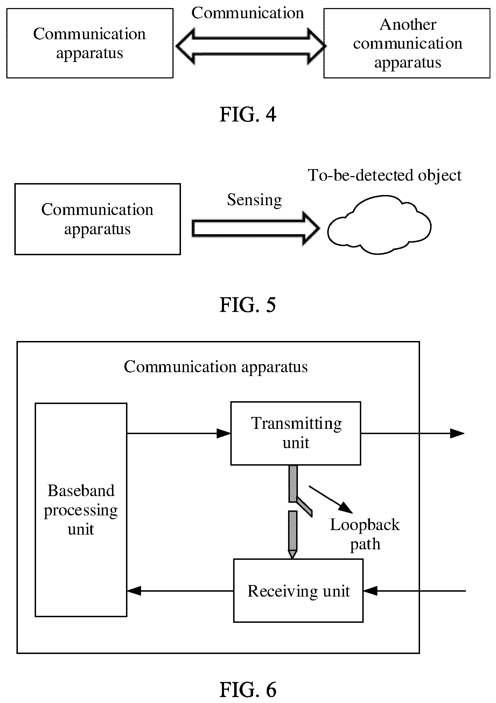

For example, the communication apparatus provided in this application, for example, as shown in FIG. 4, may be used in a scenario in which communication with another communication apparatus (for example, a smartphone, a tablet computer, a notebook computer, a foldable mobile phone, a large-screen device, a smart television, or a head unit) is performed by using a terahertz wave signal.

For another example, as shown in FIG. 5, the communication apparatus provided in this application may also be used in a scenario in which a to-be-detected object is sensed by using a terahertz wave signal, for example, in a scenario in which a type of the to-be-detected object is detected by using the terahertz wave signal, a physical structure form of the to-be-detected object is determined by using the terahertz wave signal, and a distance between the to-be-detected object and the communication apparatus is measured by using the terahertz wave signal. Certainly, the communication apparatus provided in this application may be further used in another scenario. This is not limited in embodiments of this application.

In the following example, a signal within a terahertz band (that is, a terahertz wave signal) may be used as an example for description. However, it should be understood that, in another embodiment of this application, the communication apparatus may further perform communication and sensing on a to-be-detected object by using signals within another frequency band like a millimeter wave. A specific frequency band (or frequency) of a signal used by the communication apparatus is not limited in embodiments of this application.

The following describes in detail the communication apparatus provided in this application with reference to the accompanying drawings.

FIG. 6 is a diagram illustrating a structure of a communication apparatus according to this application. As shown in FIG. 6, the communication apparatus includes a baseband processing unit (also referred to as a baseband processing system), a transmitting unit, a receiving unit, and a loopback path. The loopback path exists between the transmitting unit and the receiving unit. The loopback path may be switched between a disconnected state and a connected state. For example, the loopback path may be a high-frequency transmission line.

In the structure shown in FIG. 6, the baseband processing unit is configured to: generate a communication signal or a sensing signal, and transmit the communication signal or the sensing signal to the transmitting unit. The communication signal is used for communication between the communication apparatus and another communication apparatus, and the sensing signal is used for sensing a to-be-detected object.

For example, in this embodiment of this application, sensing the to-be-detected object may include: detecting a type of the to-be-detected object, determining a physical structure form of the to-be-detected object, and measuring a distance between the to-be-detected object and the communication apparatus. Certainly, in another implementation of this application, sensing the to-be-detected object may further include sensing the to-be-detected object in another manner, in another type, or the like. This is not limited in embodiments of this application. The physical structure form of the to-be-detected object may be understood as a physical outline of the to-be-detected object. For example, the outline of the to-be-detected object may be a cuboid, a cube, a sphere, or another irregular shape. The type of the to-be-detected object may be understood as a substance attribute of the to-be-detected object, for example, a type of polymer material, a bioprotein, or a semiconductor material to which the to-be-detected object belongs.

In some possible implementations, the transmitting unit is configured to: receive the communication signal, modulate the communication signal to a first frequency band wave signal (a first terahertz wave signal is used as an example for description), and send the first terahertz wave signal to another communication apparatus, so as to communicate with the another communication apparatus. In this embodiment of this application, the first terahertz wave signal may be a terahertz wave signal of a fixed frequency (fixed frequency). For example, a frequency of the first terahertz wave signal may be a first frequency. In this case, the loopback path is in a disconnected state.

In some other possible implementations, the transmitting unit is configured to: receive the sensing signal, modulate the sensing signal to a second frequency band wave signal (a second terahertz wave signal is used as an example for description), transmit (send) a first part of the second terahertz wave signal to the to-be-detected object, and send a second part of the second terahertz wave signal to the receiving unit through the loopback path. The receiving unit is configured to: receive the second terahertz wave signal reflected by the to-be-detected object and the second part of the second terahertz wave signal, and transmit, to the baseband processing unit, the second terahertz wave signal reflected by the to-be-detected object and the second part of the second terahertz wave signal, or transmit, to the baseband processing unit, a signal obtained by processing the second terahertz wave signal reflected by the to-be-detected object and the second part of the second terahertz wave signal. The baseband processing unit is further configured to: perform distance measurement and/or physical structure form sensing on the to-be-detected object based on the second terahertz wave signal reflected by the to-be-detected object and the second part of the second terahertz wave signal, or based on the signal obtained by processing the second terahertz wave signal reflected by the to-be-detected object and the second part of the second terahertz wave signal. In this embodiment of this application, a frequency of the second terahertz wave signal may change with time. In other words, the frequency of the second terahertz wave signal may belong to a wide frequency range instead of being fixed. In this case, the loopback path is in a connected state.

For example, the receiving unit may convert, into a first voltage signal (or a first current signal), the second terahertz wave signal reflected by the to-be-detected object, convert, into a second voltage signal (or a second current signal), the second part of the second terahertz wave signal transmitted through the loopback path, and then transmit the first voltage signal and the second voltage signal to the baseband processing unit. The baseband processing unit may obtain time difference information between the two voltage signals based on the first voltage signal and the second voltage signal, and determine the distance between the to-be-detected object and the communication apparatus and/or a physical structure (also referred to as the physical structure form) of the to-be-detected object based on the time difference information.

For another example, the baseband processing unit may compare the second terahertz wave signal reflected by the to-be-detected object with the second terahertz wave signal transmitted through the loopback path, to obtain time difference information of the two received second terahertz wave signals, and determine, based on the time difference information, the distance between the to-be-detected object and the communication apparatus and/or the physical structure of the to-be-detected object.

In some other possible implementations, the transmitting unit is configured to: when the to-be-detected object is not placed on the loopback path, modulate the sensing signal to a first signal, and send the first signal to the receiving unit through the loopback path. The transmitting unit is further configured to: when there is a to-be-detected object placed on the loopback path, modulate the sensing signal to a second signal, and send the second signal to the receiving unit through the loopback path. The first signal and the second signal each are a second frequency band wave signal (a terahertz wave band signal is used as an example for description, for example, the first signal and the second signal each may be a second terahertz wave signal). The receiving unit is configured to: receive the first signal and the second signal that are transmitted through the loopback path, and transmit the first signal and the second signal to the baseband processing unit; or configured to transmit, to the baseband processing unit, signals obtained through respective processing on the first signal and the second signal. The baseband processing unit is further configured to determine a substance type of the to-be-detected object based on the first signal and the second signal or the signals obtained through respective processing on the first signal and the second signal, to perform spectrum sensing on the to-be-detected object, so as to determine a substance attribute of the to-be-detected object. In this embodiment of this application, a frequency of the second terahertz wave signal may change with time. In other words, the frequency of the second terahertz wave signal may belong to a wide frequency range instead of being fixed. In this case, the loopback path is in a connected state.

After the to-be-detected object is loaded, the to-be-detected object may absorb the second terahertz wave signal transmitted through the loopback path, and one or more absorption peaks may appear at some frequencies. After the receiving unit receives the second terahertz wave signal (namely, the first signal) transmitted through the loopback path when the to-be-detected object is not loaded (that is, when the loopback path is unloaded), the second terahertz wave signal may be converted into a corresponding voltage signal or current signal (referred to as the first voltage signal or the first current signal) as a reference. In addition, after the second terahertz wave signal (namely, the second signal) transmitted through the loopback path when the to-be-detected object is loaded is received, the second terahertz wave signal transmitted through the loopback path on which the to-be-detected object is loaded is converted into a corresponding voltage signal or current signal (referred to as the second voltage signal or the second current signal), and the first voltage signal or the first current signal and the second voltage signal or the second current signal are transmitted to the baseband processing unit. The baseband processing unit determines a frequency of an absorption peak of the to-be-detected object for the second terahertz wave signal, an amplitude of the absorption peak, and the like (that is, performs spectrum sensing) based on the first voltage signal and the second voltage signal, or the first current signal and the second current signal. In this way, the type or the substance attribute of the to-be-detected object can be determined.

For example, the baseband processing unit may pre-store multiple different substances and frequencies and amplitudes of absorption peaks corresponding to the multiple different substances; and after the frequency and the amplitude of the absorption peak of the to-be-detected object are determined, comparison may be performed on the frequency and the amplitude of the absorption peak and the pre-stored information, to determine a frequency and an amplitude of an absorption peak that match the frequency and the amplitude of the absorption peak, so as to determine a type or an attribute of a corresponding substance as the substance type or the attribute of the to-be-detected object based on the frequency and the amplitude of the absorption peak that match the frequency and the amplitude of the absorption peak.

It should be understood that, in this embodiment of this application, when a signal generated by the baseband processing unit is a communication signal, the loopback path is in a disconnected state, that is, a signal cannot be transmitted between the transmitting unit and the receiving unit. When a signal generated by the baseband processing unit is a sensing signal, the loopback path is in a connected state, that is, a terahertz wave signal may be transmitted between the transmitting unit and the receiving unit through the loopback path.

For example, the baseband processing unit may control the loopback path to be in a disconnected state or a connected state. For example, the baseband processing unit may send a control signal to the loopback path based on a type of the signal generated by the baseband processing unit, to control the loopback path to be disconnected or connected.

For example, in a possible implementation, a switch may be disposed on the loopback path, and the switch may be connected to a controller (or a control circuit or the like). The controller may turn on or turn off the switch based on a signal sent by the baseband processing unit, so that the loopback path is in a disconnected state or a connected state. For example, when the signal generated by the baseband processing unit is a sensing signal, the baseband processing unit may send a signal to the controller of the switch, and the controller turns on the switch based on the signal sent by the baseband processing unit, so that the loopback path is in a connected state. When the signal generated by the baseband processing unit is a communication signal, the baseband processing unit may also send another signal to the controller of the switch, and the controller turns off the switch based on the signal sent by the baseband processing unit, so that the loopback path is in a disconnected state.

When the signal generated by the baseband processing unit is the communication signal, because the loopback path is in a disconnected state, the first terahertz wave signal generated by the transmitting unit cannot be transmitted to the receiving unit through the loopback path. The transmitting unit transmits, through space radiation, the first terahertz wave signal to another communication apparatus that communicates with the communication apparatus, to implement communication between the communication apparatus and the another communication apparatus.

When the signal generated by the baseband processing unit is a sensing signal, because the loopback path is in a connected state, at least a part of the second terahertz wave signal generated by the transmitting unit is transmitted to the receiving unit through the loopback path.

Optionally, in a possible implementation, the communication apparatus may further include a transmit antenna and a receive antenna. The transmit antenna is connected to the transmitting unit, and is configured to transmit the first terahertz wave signal or the second terahertz wave signal. The receive antenna is connected to the receiving unit, and is configured to receive the second terahertz wave signal reflected by the to-be-detected object, or receive a terahertz wave signal sent by another communication apparatus, and transmit the received terahertz wave signal to the receiving unit. Optionally, in another possible implementation, the transmit antenna may alternatively be integrated into the transmitting unit, that is, the transmitting unit includes the transmit antenna. Certainly, the receive antenna may alternatively be integrated into the receiving unit, that is, the receiving unit includes the receive antenna. A specific manner of disposing the transmit antenna and the receive antenna is not limited in embodiments of this application.

According to the communication apparatus provided in this application, the baseband processing unit generates the communication signal or the sensing signal, the transmitting unit modulates the communication signal or the sensing signal into a terahertz wave signal at a different frequency and sends the terahertz wave signal, and an optional loopback path is disposed between the transmitting unit and the receiving unit. In a communication mode, the loopback path is in a disconnected state, and the transmitting unit modulates the communication signal to a terahertz wave signal at a fixed frequency and sends the signal, to implement communication with another communication apparatus. In a sensing mode, the transmitting unit modulates the sensing signal to a wide-band terahertz wave signal and sends the wide-band terahertz wave signal. The loopback path is in a connected state. The receiving unit receives a terahertz wave signal transmitted on the loopback path and a terahertz wave signal reflected by the to-be-detected object, and the baseband processing unit processes the terahertz wave signal transmitted on the loopback path and the terahertz wave signal reflected by the to-be-detected object, to sense the to-be-detected object. In other words, communication and sensing performed by using the terahertz wave signals coexist in a same communication apparatus. This improves use efficiency of the terahertz wave signal and the communication apparatus. In addition, a structure of the communication apparatus is simple, and is easy to be implemented.

It may be understood that the communication apparatus provided in embodiments of this application may be various terminal devices (for example, a smartphone, a tablet computer, a notebook computer, a foldable mobile phone, a large-screen device, a smart television, and a head unit), or the terminal devices in the various forms may include the communication apparatus provided in embodiments of this application.

Optionally, in a possible implementation, in this embodiment of this application, the receiving unit may be implemented by a frequency mixer, for example, a Schottky diode frequency mixer, or the receiving unit may be implemented by a wave detector. In other words, in this embodiment of this application, the receiving unit may include a frequency mixer or a wave detector. Certainly, in another implementation of this application, the receiving unit may alternatively be implemented by using another electronic component or circuit. This is not limited in embodiments of this application.

Optionally, in a possible implementation, the loopback path may be a high-frequency transmission line partially exposed to a surface of the communication apparatus. In other words, the loopback path may be partially or completely disposed on the surface of the communication apparatus, so that a user can place the to-be-detected object on the loopback path, to sense the to-be-detected object.

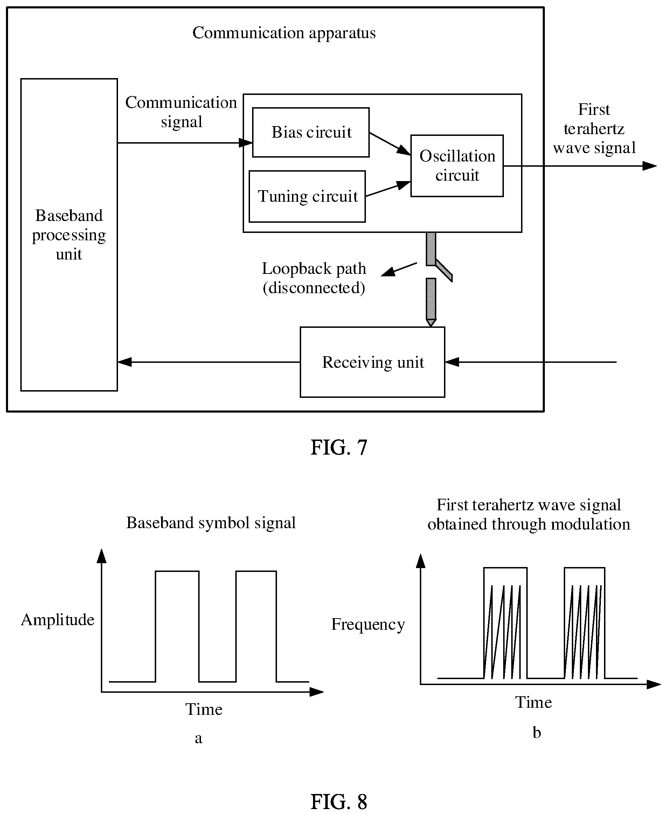

Optionally, in a possible implementation, FIG. 7 is a diagram illustrating a structure of a communication apparatus in a communication mode according to this application. As shown in FIG. 7, the communication apparatus includes: a baseband processing unit, a transmitting unit, a receiving unit, and a loopback path, where the loopback path is in a disconnected state. In the example shown in FIG. 7, the transmitting unit includes a bias circuit, a tuning circuit, and an oscillation circuit, and both the bias circuit and the tuning circuit are connected to the oscillation circuit.

In the structure shown in FIG. 7, the baseband processing unit generates a communication signal, and sends the communication signal to the bias circuit. For example, the communication signal may include a digital communication signal, or a baseband symbol signal. A specific form of the communication signal is not limited in embodiments of this application.

The tuning circuit is configured to configure a frequency of the oscillation circuit to a first frequency, where the first frequency is a frequency of a first terahertz wave signal. For example, the tuning circuit may output a voltage signal with a fixed voltage value or a current signal with an unchanged current value to the oscillation circuit, and configure the frequency of the oscillation circuit to the first frequency (a fixed frequency). To be specific, the tuning circuit in the transmitting unit may configure an oscillation current to be in a fixed frequency mode, so that a terahertz wave signal (that is, the first terahertz wave signal) transmitted by the oscillation circuit is a terahertz wave signal at a fixed frequency (that is, the first frequency).

The bias circuit is configured to: receive the communication signal sent by the baseband processing unit, and transmit the communication signal to the oscillation circuit. For example, the baseband processing unit may amplify a generated digital communication signal or baseband symbol signal to a specific level, and then feed an amplified digital communication signal or baseband symbol signal into the oscillation circuit through the bias circuit. It may be understood that, in this embodiment of this application, the bias circuit may control the oscillation circuit to be on and off.

The oscillation circuit is configured to: modulate the communication signal to the first terahertz wave signal, and send the first terahertz wave signal to another communication apparatus. In the implementation shown in FIG. 7, the bias circuit may feed the digital communication signal or the baseband symbol signal into the oscillation circuit, and the oscillation circuit receives the digital communication signal or the baseband symbol signal, and circulates between being in an on state and being in a disconnected (off) state, to modulate the digital communication signal to the first terahertz wave signal. To be specific, the oscillation circuit is in two states: an on state and a disconnected state under tuning of the bias circuit, that is, circulates between being in an on state and being in an off state, to modulate the digital communication signal to the first terahertz wave signal, and finally transmit the first terahertz wave signal to another communication apparatus through the transmit antenna, so as to implement communication between the communication apparatus and another communication apparatus.

It should be understood that, in the example shown in FIG. 7, a signal generated by the baseband processing unit is a communication signal, that is, the communication apparatus is in the communication mode, and in this case, the loopback path is in a disconnected state. For example, when the signal generated by the baseband processing unit is a communication signal, the baseband processing unit may also send a signal to a controller of a switch on the loopback path, and the controller turns off the switch on the loopback path based on the signal sent by the baseband processing unit, so that the loopback path is in a disconnected state.

Certainly, in the structure shown in FIG. 7, the receiving unit may receive a terahertz wave signal sent by another communication apparatus, perform frequency mixing or wave detection processing on the received terahertz wave signal, to obtain a communication signal (for example, the baseband symbol signal), and then transmit the obtained communication signal to the baseband processing unit, to implement communication between the communication apparatus and the another communication apparatus.

For example, FIG. 8 is a diagram of structures of a baseband symbol signal generated by a baseband processing unit and a first terahertz wave signal obtained through modulation. a in FIG. 8 shows a baseband symbol signal. b in FIG. 8 is a diagram illustrating time and a frequency of a terahertz wave signal obtained through modulation.

In the implementation shown in FIG. 7, the tuning circuit is configured to configure the oscillation circuit to output the terahertz wave signal at the fixed frequency, and the bias circuit is configured to feed the communication signal (for example, the baseband symbol signal) into the oscillation circuit, to implement a cycle between being in an on state and being in an off state of the oscillation circuit, so that the communication signal is modulated to the terahertz wave signal, to implement a communication function of the apparatus. This structure is simple, and is easy to be implemented.

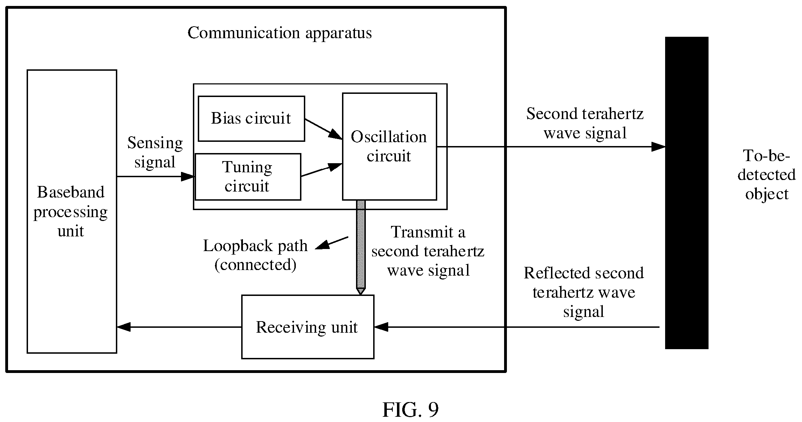

Optionally, in a possible implementation, FIG. 9 is a diagram illustrating a structure of a communication apparatus in a sensing mode according to this application. As shown in FIG. 9, the communication apparatus includes: a baseband processing unit, a transmitting unit, a receiving unit, and a loopback path, where the loopback path is in a connected state. The transmitting unit includes a bias circuit, a tuning circuit, and an oscillation circuit, and both the bias circuit and the tuning circuit are connected to the oscillation circuit.

In the structure shown in FIG. 9, the baseband processing unit is configured to generate a sensing signal. For example, the sensing signal may be a sawtooth wave voltage signal, and the baseband processing unit sends the sensing signal to the tuning circuit.

The bias circuit is configured to control the oscillation circuit to be in an on state. In other words, in this implementation, the bias circuit controls the oscillation circuit to keep in an on state, so that the oscillation circuit can always generate a terahertz wave signal.

The tuning circuit is configured to: receive the sensing signal, and configure the oscillating current to be in a frequency sweeping mode. To be specific, the tuning circuit in the transmitting unit may configure the oscillation current to be in a frequency sweeping mode, so that the terahertz wave signal (that is, a second terahertz wave signal) transmitted by the oscillation circuit is a wide-band terahertz wave signal, that is, a frequency of the terahertz wave signal transmitted by the oscillation circuit is time-varying, and a frequency of the terahertz wave signal belongs to a frequency range (that is, a second frequency range).

The oscillation circuit is further configured to: receive the sensing signal sent by the tuning circuit, modulate the sensing signal to the second terahertz wave signal, send a first part of the second terahertz wave signal to a to-be-detected object, and transmit a second part of the second terahertz wave signal on the loopback path. In other words, the second terahertz wave signal includes the first part and the second part, and a frequency of the second terahertz wave signal belongs to a wide frequency range (that is, the second frequency range).

For example, the sensing signal may be a sawtooth wave voltage signal. This is not limited herein in embodiments of this application.

It should be understood that, in the example shown in FIG. 9, a signal generated by the baseband processing unit is a sensing signal, that is, the communication apparatus is in the sensing mode, and in this case, the loopback path is in a connected state. For example, when the signal generated by the baseband processing unit is a sensing signal, the baseband processing unit may also send a signal to a controller of a switch on the loopback path, and the controller turns on the switch on the loopback path based on the signal sent by the baseband processing unit, so that the loopback path is in a connected state.

In the example shown in FIG. 9, because the loopback path is in a connected state, in the second terahertz wave signal transmitted by the oscillation circuit, one part (namely, the first part) is sent to the to-be-detected object through a transmit antenna and space radiation, and another part (namely, the second part) is sent to the receiving unit through the loopback path. In other words, the transmitting unit is configured to: modulate the sensing signal to the second terahertz wave signal, transmit the first part of the second terahertz wave signal to the to-be-detected object, and transmit the second part of the second terahertz wave signal to the receiving unit through the loopback path.

For example, the baseband processing unit may generate the sawtooth wave voltage signal, amplify the sawtooth wave voltage signal to a specific level, and feed the sawtooth wave voltage signal into the oscillation circuit through the tuning circuit. The oscillation circuit modulates the sawtooth wave voltage signal to the second terahertz wave signal based on the sawtooth wave voltage signal and the frequency sweeping mode configured by the tuning circuit, sends the first part of the second terahertz wave signal to the to-be-detected object, and transmits the second part of the second terahertz wave signal on the loopback path.

After the second terahertz wave signal sent by the oscillation circuit to the to-be-detected object is in contact with the to-be-detected object, the to-be-detected object may reflect a part of the terahertz wave signal. In other words, the to-be-detected object may reflect the received second terahertz wave signal. Therefore, the receiving unit may receive the second terahertz wave signal reflected by the to-be-detected object, and the receiving unit may receive the second terahertz wave signal transmitted through the loopback path. To be specific, the receiving unit may receive the second terahertz wave signal reflected by the to-be-detected object and the second part of the second terahertz wave signal.

After the receiving unit receives the second terahertz wave signal reflected by the to-be-detected object and the second part of the second terahertz wave signal, a possible implementation is: The receiving unit may send, to the baseband processing unit, the second terahertz wave signal reflected by the to-be-detected object and the second part of the second terahertz wave signal; and another possible implementation is: The receiving unit may first separately process the second terahertz wave signal reflected by the to-be-detected object and the second part of the second terahertz wave signal, for example, convert, into a first sensing signal, the second terahertz wave signal reflected by the to-be-detected object, and convert, into a second sensing signal, the second terahertz wave signal transmitted through the loopback path, and then the receiving unit may transmit the first sensing signal and the second sensing signal to the baseband processing unit.

For example, because there is a time difference between the second terahertz wave signal reflected by the to-be-detected object and the second part of the second terahertz wave signal that are received by the receiving unit, the receiving unit may convert, into a first voltage signal or a first current signal, the second terahertz wave signal reflected by the to-be-detected object, convert, into a second voltage signal or a second current signal, the second terahertz wave signal transmitted through the loopback path, and transmit the first voltage signal or the first current signal, and the second voltage signal or the second current signal to the baseband processing unit.

The baseband processing unit is configured to determine a distance between the to-be-detected object and the communication apparatus based on the second terahertz wave signal reflected by the to-be-detected object and the second part of the second terahertz wave signal, or signals (for example, the first voltage signal or the first current signal, and the second voltage signal or the second current signal) obtained through processing on the second terahertz wave signal reflected by the to-be-detected object and the second part of the second terahertz wave signal.

For example, the baseband processing unit may obtain time difference information of the two voltage signals based on the received first voltage signal and the received second voltage signal, and determine the distance between the to-be-detected object and the communication apparatus based on the time difference information.

For another example, the baseband processing unit may compare the second terahertz wave signal reflected by the to-be-detected object with the second terahertz wave signal transmitted through the loopback path, to obtain time difference information of the received second terahertz wave signals, and then send the time difference information to the baseband processing unit. The baseband processing unit determines the distance between the to-be-detected object and the communication apparatus based on the time difference information.

For another example, the receiving unit may perform a frequency mixing operation on the second terahertz wave signal reflected by the to-be-detected object and the second terahertz wave signal transmitted through the loopback path, and output a frequency difference. The frequency difference is directly proportional to the distance between the to-be-detected object and the communication apparatus, and the distance between the to-be-detected object and the communication apparatus is determined based on the frequency difference.

It should be understood that, in this embodiment of this application, if the communication apparatus provided in this application is used to determine a physical structure (also referred to as a physical structure form) of the to-be-detected object, another sensor (for example, a depth of field camera and a micro-electro-mechanical system (micro-electro-mechanical system, MEMS) gyroscope) in the communication apparatus may be combined, that is, the depth of field camera and the MEMS gyroscope in the communication apparatus may be coordinated, to sense the physical structure form of the to-be-detected object.

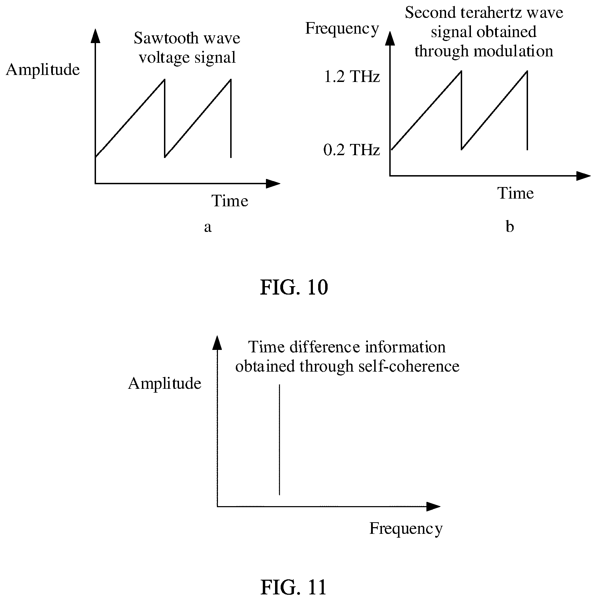

For example, FIG. 10 is a diagram of a structure of a sawtooth wave voltage signal generated by a baseband processing unit and a terahertz wave signal obtained through modulation. a in FIG. 10 is a diagram in which a voltage amplitude of a sawtooth wave voltage signal generated by a baseband processing unit is time-varying, and b in FIG. 10 is a diagram in which a frequency of a terahertz wave signal obtained through modulation (that is, a second terahertz wave signal) is time-varying. FIG. 11 is a diagram of a time difference obtained by performing self-coherence on a second terahertz wave signal reflected by a to-be-detected object and a second terahertz wave signal transmitted through a loopback path.

In the implementation shown in FIG. 9, the tuning circuit is configured to configure the oscillation circuit to output a wide-band terahertz wave signal at a variable frequency, and the tuning circuit is configured to feed the sensing signal (for example, the sawtooth wave voltage signal) into the oscillation circuit, so that the communication signal is modulated to the terahertz wave signal, to implement a sensing function (for example, distance measurement) of the communication apparatus on the to-be-detected object. This structure is simple, and is easy to be implemented.

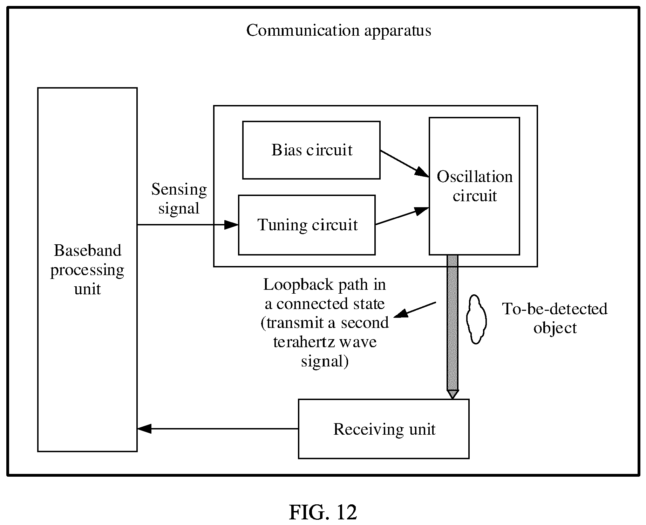

Optionally, in another possible implementation, FIG. 12 is a diagram illustrating another structure of a communication apparatus in a sensing mode according to this application. As shown in FIG. 12, the communication apparatus includes: a baseband processing unit, a transmitting unit, a receiving unit, and a loopback path, where the loopback path is in a connected state. The transmitting unit includes a bias circuit, a tuning circuit, and an oscillation circuit, and both the bias circuit and the tuning circuit are connected to the oscillation circuit.

In the structure shown in FIG. 12, the baseband processing unit is configured to generate a sensing signal. For example, the sensing signal may be a sawtooth wave voltage signal, and the baseband processing unit sends the sensing signal to the tuning circuit.

The bias circuit is configured to control the oscillation circuit to be in an on state. In other words, in this implementation, the bias circuit controls the oscillation circuit to keep in an on state, so that the oscillation circuit can always generate a terahertz wave signal.

The tuning circuit is configured to: receive the sensing signal, and configure the oscillating current to be in a frequency sweeping mode. To be specific, the tuning circuit in the transmitting unit may configure the oscillation current to be in a frequency sweeping mode, so that the terahertz wave signal (that is, a second terahertz wave signal) transmitted by the oscillation circuit is a wide-band terahertz wave signal, that is, a frequency of the terahertz wave signal transmitted by the oscillation circuit is time-varying, and the frequency of the terahertz wave signal belongs to a frequency range (that is, a second frequency range).

The oscillation circuit is further configured to: receive the sensing signal sent by the tuning circuit, modulate the sensing signal to the second terahertz wave signal, and send the second terahertz wave signal. A frequency of the second terahertz wave signal belongs to a wide frequency range (that is, the second frequency range).

For example, the sensing signal may be a sawtooth wave voltage signal. This is not limited herein in embodiments of this application.

It should be understood that, in the example shown in FIG. 12, a signal generated by the baseband processing unit is a sensing signal, that is, the communication apparatus is in the sensing mode, and in this case, the loopback path is in a connected state. For example, when the signal generated by the baseband processing unit is a sensing signal, the baseband processing unit may also send a signal to a controller of a switch on the loopback path, and the controller turns on the switch on the loopback path based on the signal sent by the baseband processing unit, so that the loopback path is in a connected state.

In the example shown in FIG. 12, because the loopback path is in a connected state, in the second terahertz wave signal transmitted by the oscillation circuit, one part is radiated to space through a transmit antenna, and another part is sent to the receiving unit through the loopback path.

For example, the baseband processing unit may generate the sawtooth wave voltage signal, amplify the sawtooth wave voltage signal to a specific level, and feed the sawtooth wave voltage signal into the oscillation circuit through the tuning circuit. The oscillation circuit modulates the sawtooth wave voltage signal to the second terahertz wave signal based on the sawtooth wave voltage signal and the frequency sweeping mode configured by the tuning circuit, and transmits a part of the second terahertz wave signal on the loopback path.

In a possible implementation, because the loopback path in this embodiment of this application may be a high-frequency transmission line partially exposed to a surface of the communication apparatus, when the loopback path is unloaded, that is, when no to-be-detected object is placed on the loopback path, the second terahertz wave signal (also referred to as a first signal) transmitted on the loopback path may be transmitted to the receiving unit.

When the loopback path is unloaded, the receiving unit may receive the second terahertz wave signal transmitted through the loopback path. After the second terahertz wave signal is transmitted through the loopback path, a receive power of the second terahertz wave signal at one or more frequencies changes. Therefore, the receiving unit may determine a receive power of the second terahertz wave signal at each frequency based on the second terahertz wave signal transmitted through the loopback path, and convert the receive power of the second terahertz wave signal at each frequency into a low-frequency voltage signal or current signal. Then the voltage signal or the current signal is sent to the baseband processing unit as a reference. Alternatively, the receiving unit may transmit, to the baseband processing unit, the second terahertz wave signal transmitted through the loopback path, and the baseband processing unit may convert, based on the second terahertz wave signal transmitted through the loopback path, the second terahertz wave signal into a low-frequency voltage signal or current signal (for example, a first voltage signal or a first current signal), to determine a receive power of the second terahertz wave signal at each frequency. Then the receive power of the second terahertz wave signal at each frequency is used as a reference.

When the loopback path is unloaded, after the receive power of the second terahertz wave signal at each frequency is determined, the to-be-detected object may be placed on the loopback path, for example, as shown in FIG. 12. For example, the to-be-detected object is placed on the loopback path exposed to the surface of the communication apparatus. In this case, in the second terahertz wave signal transmitted by the oscillation circuit, one part is radiated to space through the transmit antenna, and another part is transmitted to the receiving unit through the loopback path on which the to-be-detected object is loaded. Because the to-be-detected object has different absorption rates for terahertz wave signals at different frequencies, one or more absorption peaks appear at some frequencies. In other words, the to-be-detected object may absorb the second terahertz wave signal (also referred to as a second signal) transmitted on the loopback path, and after the second terahertz wave signal is transmitted through the loopback path on which the to-be-detected object is loaded, the receive power of the second terahertz wave signal at one or more frequencies may change. Therefore, the receiving unit may receive the second terahertz wave signal transmitted through the loopback path on which the to-be-detected object is loaded, determine the receive power of the second terahertz wave signal at each frequency based on the second terahertz wave signal transmitted through the loopback path on which the to-be-detected object is loaded, convert the receive power of the second terahertz wave signal at each frequency into a low-frequency voltage signal or current signal (for example, a second voltage signal or a second current signal), and then send the voltage signal or the current signal to the baseband processing unit. Alternatively, the receiving unit may transmit, to the baseband processing unit, the second terahertz wave signal transmitted through the loopback path when the to-be-detected object is loaded, and the baseband processing unit may convert, based on the second terahertz wave signal transmitted through the loopback path, the second terahertz wave signal into a low-frequency voltage signal or current signal (for example, the second voltage signal or the second current signal), to determine the receive power of the second terahertz wave signal at each frequency.

In a possible implementation, the baseband processing unit may receive the first voltage signal or the first current signal corresponding to the second terahertz wave signal transmitted on the loopback path when the to-be-detected object is not loaded (that is, when the loopback path is unloaded), and the second voltage signal or the second current signal corresponding to the second terahertz wave signal transmitted on the loopback path when the to-be-detected object is loaded; and determine, based on the first voltage signal and the second voltage signal, or the first current signal and the second current signal, a frequency of an absorption peak of the to-be-detected object for the second terahertz wave signal, an amplitude of the absorption peak, and the like, so that a type or a substance attribute of the to-be-detected object can be determined.

In another possible implementation, the baseband processing unit may receive the second terahertz wave signal transmitted on the loopback path on which the to-be-detected object is not loaded (that is, when the loopback path is unloaded), and the second terahertz wave signal transmitted on the loopback path when the to-be-detected object is loaded, to further determine the first voltage signal or the first current signal corresponding to the second terahertz wave signal transmitted on the loopback path when the to-be-detected object is not loaded (that is, when the loopback path is unloaded), and the second voltage signal or the second current signal corresponding to the second terahertz wave signal transmitted on the loopback path when the to-be-detected object is loaded; and determine, based on the first voltage signal and the second voltage signal, or the first current signal and the second current signal, a frequency of an absorption peak of the to-be-detected object for the second terahertz wave signal, an amplitude of the absorption peak, and the like, so that a type or a substance attribute of the to-be-detected object can be determined.

For example, the baseband processing unit may pre-store multiple different substances and frequencies and amplitudes of absorption peaks corresponding to multiple different substances; and after the frequency and the amplitude of the absorption peak of the to-be-detected object are determined, comparison may be performed on the frequency and the amplitude of the absorption peak and the pre-stored information, to determine a frequency and an amplitude of an absorption peak that match the frequency and the amplitude of the absorption peak, so as to determine a type or an attribute of a corresponding substance as the substance type or the attribute of the to-be-detected object based on the frequency and the amplitude of the absorption peak that match the frequency and the amplitude of the absorption peak.

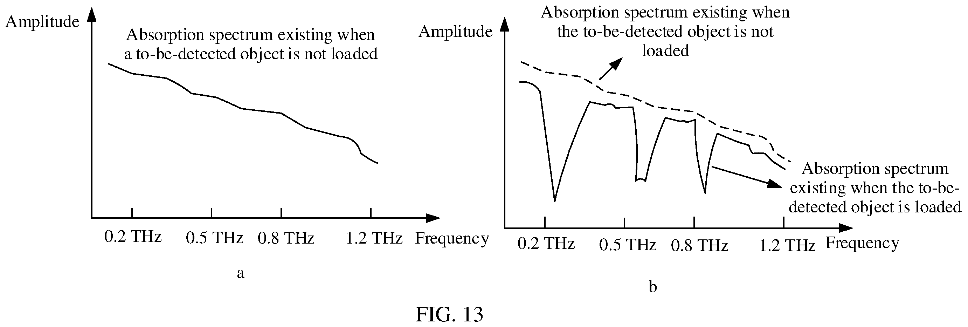

For example, FIG. 13 is a diagram illustrating an absorption spectrum of a second terahertz wave signal existing when a to-be-detected object is not loaded and an absorption spectrum of the second terahertz wave signal existing when the to-be-detected object is loaded. a in FIG. 13 shows an absorption spectrum of a second terahertz wave signal existing when a to-be-detected object is not loaded. The baseband processing unit may determine the absorption spectrum of the second terahertz wave signal based on the second terahertz wave signal transmitted through the loopback path on which the to-be-detected object is not loaded. b in FIG. 13 shows an absorption spectrum of a second terahertz wave signal existing when the to-be-detected object is loaded. The baseband processing unit may determine the absorption spectrum of the second terahertz wave signal based on the second terahertz wave signal transmitted through the loopback path on which the to-be-detected object is loaded. The baseband processing unit may determine, based on the absorption spectrum of the second terahertz wave signal existing when the to-be-detected object is not loaded and the absorption spectrum of the second terahertz wave signal existing when the to-be-detected object is loaded, the frequency of the absorption peak of the to-be-detected object for the second terahertz wave signal, the amplitude of the absorption peak, and the like, so that the type or the substance attribute of the to-be-detected object can be determined.

For example, the type or attribute of the to-be-detected object may include a bioprotein, a nanostructure material, and an electron in a semiconductor. The type or the attribute of the to-be-detected object is not limited in embodiments of this application.

In the implementation shown in FIG. 12, the tuning circuit is configured to configure the oscillation circuit to output a wide-band terahertz wave signal at a variable frequency, and the tuning circuit is configured to feed the sensing signal (for example, the sawtooth wave voltage signal) into the oscillation circuit, so that the oscillation circuit modulates the communication signal to the terahertz wave signal, and determines the absorption spectrum of the terahertz wave signal existing when the to-be-detected object is not loaded on the loopback path and the absorption spectrum of the terahertz wave signal existing when the to-be-detected object is loaded on the loopback path, to determine the frequency of the absorption peak of the to-be-detected object for the terahertz wave signal, the amplitude of the absorption peak, and the like. In this way, the type or the substance attribute of the to-be-detected object can be determined, to implement a sensing function of the apparatus. This structure is simple, and is easy to be implemented.

It may be understood that, in the example shown in FIG. 12, the absorption spectrum of the terahertz wave signal existing when the to-be-detected object is loaded on the loopback path may be first determined, the to-be-detected object is removed from the loopback path, and then the absorption spectrum of the terahertz wave signal existing when the to-be-detected object is not loaded is determined. This is not limited herein in embodiments of this application.

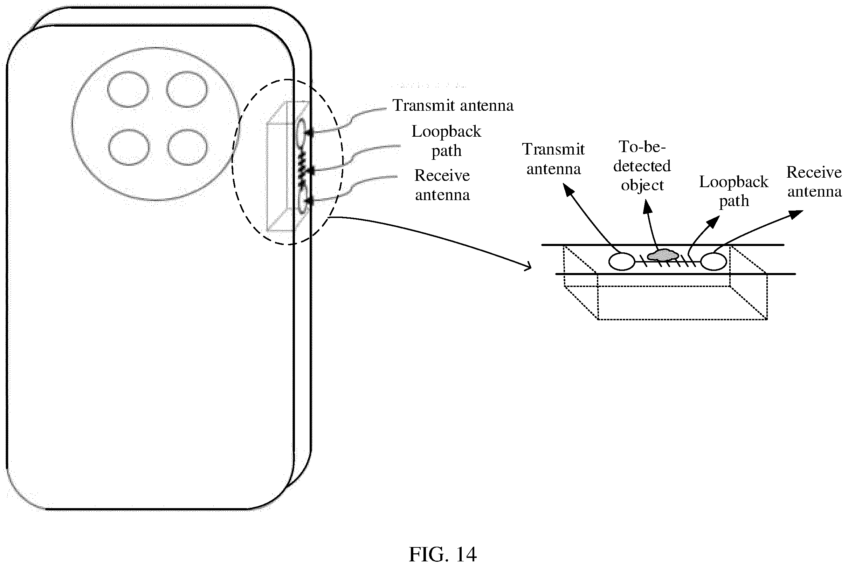

Optionally, in this embodiment of this application, in a possible implementation, FIG. 14 is a diagram illustrating a structure of an electronic device (for example, a mobile phone) according to this application. As shown in FIG. 14, the electronic device includes the communication apparatus provided in the foregoing embodiments of this application. In the example shown in FIG. 14, only the loopback path, the transmit antenna, and the receive antenna in the communication apparatus are shown, and the remaining baseband processing unit, the remaining transmitting unit, and the remaining receiving unit are not shown. In the example shown in FIG. 14, the loopback path may be a high-frequency transmission line that is at least partially exposed to a surface of the electronic device.

When a type or an attribute of a to-be-detected object is detected, for example, as shown in FIG. 14, the to-be-detected object may be placed on the loopback path, to determine the type or the attribute of the to-be-detected object.

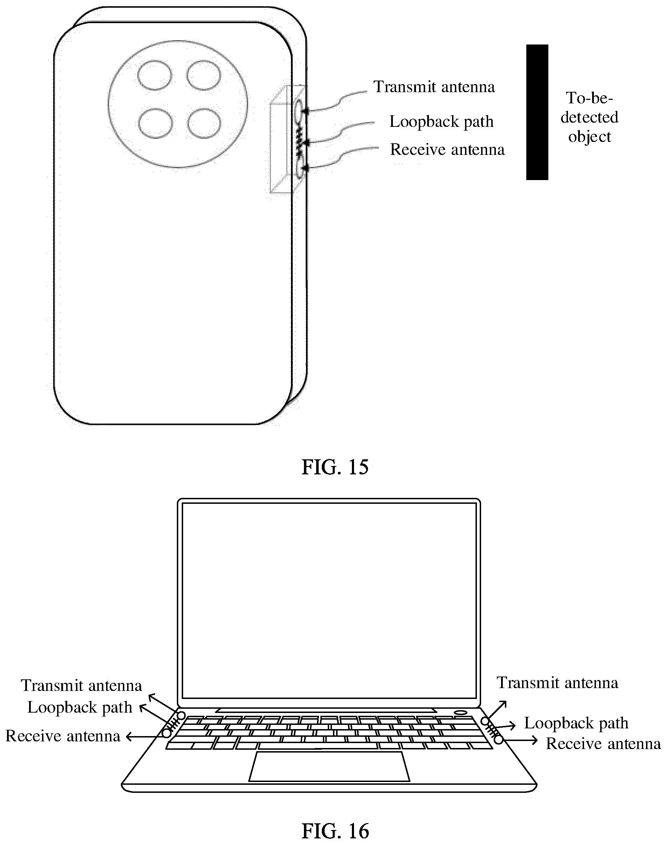

When a distance between the to-be-detected object and the electronic device and/or a physical structure form of the to-be-detected object are/is determined, for example, as shown in FIG. 15, the to-be-detected object may be placed at a location facing the transmit antenna and the receive antenna, so that the to-be-detected object can reflect a terahertz wave signal transmitted by the electronic device, and the receive antenna can receive the terahertz wave signal that can be reflected by the to-be-detected object, to determine the distance between the to-be-detected object and the electronic device and/or the physical structure form of the to-be-detected object.

Certainly, FIG. 14 and FIG. 15 are merely examples. In another implementation of this application, the communication apparatus may be disposed at another location of the electronic device. This is not limited in embodiments of this application.

For example, FIG. 16 is a diagram of another structure of an electronic device (a personal computer (personal computer, PC) is used as an example) according to this application. In the structure shown in FIG. 16, the communication apparatus provided in embodiments of this application may be disposed on a left edge or a right edge of a plane on which a keyboard is located. In the example shown in FIG. 16, only a loopback path, a transmit antenna, and a receive antenna in the communication apparatus are shown, and a remaining baseband processing unit, a remaining transmitting unit, and a remaining receiving unit are not shown.

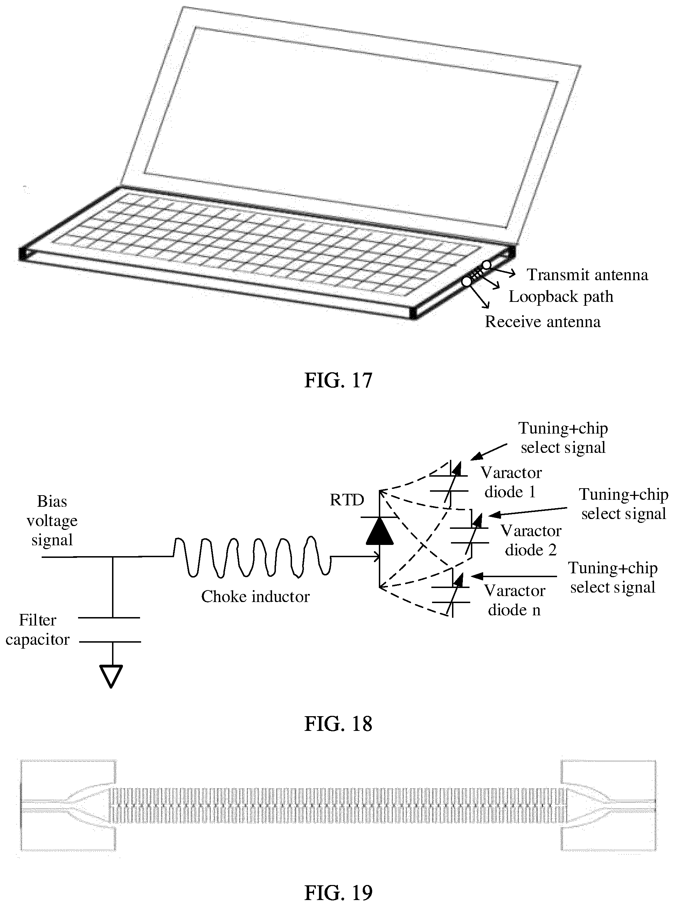

For another example, FIG. 17 is a diagram of another structure of an electronic device (a PC is used as an example) according to this application. In the structure shown in FIG. 17, the communication apparatus may be disposed on a left side surface or a right side surface of a plane on which the keyboard is located. In the example shown in FIG. 17, only a loopback path, a transmit antenna, and a receive antenna in the communication apparatus are shown, and a remaining baseband processing unit, a remaining transmitting unit, and a remaining receiving unit are not shown.

It should be understood that, in another implementation of this application, the electronic device may alternatively be in another form (for example, a tablet computer or a foldable mobile phone), and the communication apparatus may alternatively be disposed at another location of the electronic device. This is not limited in embodiments of this application.

Optionally, in a possible implementation, in this embodiment of this application, as shown in FIG. 18, a main structure of the transmitting unit in the communication apparatus may be a resonant tunneling diode (resonant tunneling diode, RTD). The baseband processing unit controls a bias voltage signal to be fed into the RTD (the RTD is equivalent to an oscillation circuit) through a bias circuit (the bias circuit includes a filter capacitor and a choke inductor), and the RTD is biased to a static working point, so that the RTD works, to transmit a terahertz wave signal. In addition, one group (or a plurality) of varactor diodes (the multiple varactor diodes are equivalent to a tuning circuit) are connected in parallel to the RTD, and a capacitance value of each varactor diode may change under control of a tuning voltage signal. For example, each varactor diode may be configured to adjust a frequency of the terahertz wave signal generated by the RTD (that is, a tuning function), each varactor diode may correspond to one chip select signal, and the chip select signal may control a corresponding varactor diode to work. The capacitance value of each varactor diode may change under control of the tuning voltage signal, and a change of a capacitance of the varactor diode may adjust the frequency of the terahertz wave signal transmitted by the RTD. The multiple varactor diodes are connected in parallel to the RTD. As capacitances of some or all of the varactor diodes change, the frequency of the terahertz wave signal transmitted by the RTD also changes, so that the frequency of the terahertz wave signal transmitted by the RTD is adjusted. Parallel connection of the multiple varactor diodes widens a tuning range of the varactor diodes, so that the RTD can implement a frequency sweeping signal at a terahertz band level.

In other words, in some possible implementations of this application, the oscillation circuit may be implemented by the RTD, the tuning circuit may be implemented by the multiple varactor diodes connected in parallel to the RTD, and the bias circuit may be implemented by the filter capacitor and the choke inductor. The multiple varactor diodes are connected in parallel to the RTD, so that the communication apparatus can output a wide-band signal at a terahertz frequency level. In this way, the communication apparatus can sense a structure and a spectrum of a to-be-detected object (that is, determine a frequency and a peak of an absorption peak of the to-be-detected object for the terahertz wave signal).

In addition, in some other possible implementations of this application, the bias circuit may feed a digital communication signal or a baseband symbol signal that may be generated by the baseband processing unit into the RTD, so that the RTD circulates between being in an on state and being in an off state, and the digital communication signal or the baseband symbol signal can be modulated to a transmitted terahertz wave signal, to implement a communication function of the communication apparatus.

Optionally, in a possible implementation, the loopback path in the communication apparatus may be implemented by using a spoof surface plasmon polariton (spoof surface plasmon polariton, SSPP) transmission line, a surface of the SSPP transmission line may be covered with thin-layer glass or an organic medium for protection, and the SSPP transmission line is partially or completely exposed to a surface of the electronic device. For example, FIG. 19 is a top view illustrating a double-sided comb SSPP transmission line. As shown in FIG. 19, a comb structure is a main structure of the SSPP transmission line, and left and right sides of the comb structure each are a transition structure from the SSPP to a conventional coplanar waveguide transmission line.

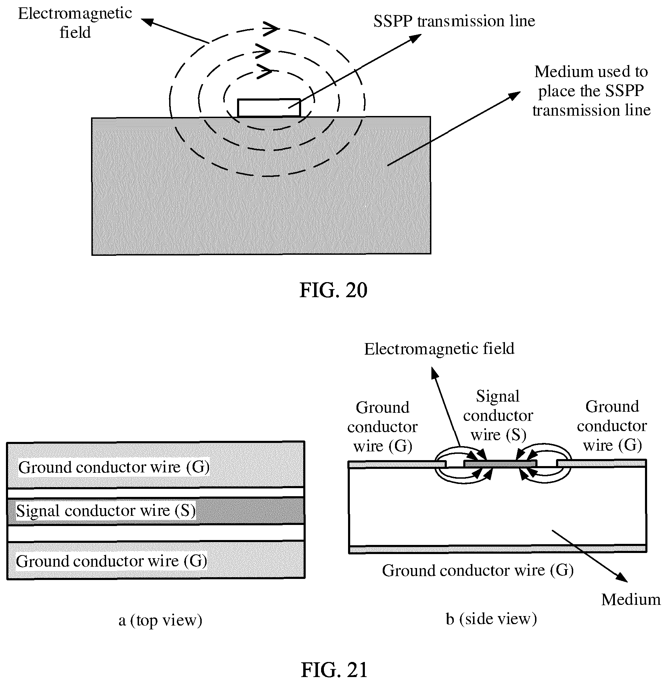

For example, FIG. 20 is a diagram illustrating an electromagnetic field distribution of a cross section of an SSPP transmission line. As shown in FIG. 20, most of an electromagnetic field of the SSPP transmission line (that is, an electromagnetic field generated by a terahertz wave signal transmitted through the SSPP transmission line) is constrained in a medium (the medium is used to place the SSPP transmission line, or is a physical carrier of the SSPP transmission line, and the medium including the SSPP transmission line is disposed on the electronic device overall); and a part of the electromagnetic field is distributed in space. After the to-be-detected object is loaded on the SSPP transmission line, the to-be-detected object may absorb the part of the electromagnetic field distributed in space, so that the to-be-detected object absorbs, at a specific frequency, the terahertz wave signal transmitted through the SSPP transmission line, and the terahertz wave signal received by the receiving unit may have an absorption peak response. In this way, an absorption spectrum of the to-be-detected object for the terahertz wave signal is determined.

Optionally, in another possible implementation, the loopback path in the communication apparatus may alternatively be implemented by using a grounded coplanar waveguide (grounded coplanar waveguide, CPWG). FIG. 21 is a diagram of a top view and a side view illustrating a CPCW. As shown in a in FIG. 21, there are two ground conductor wires (Ground, G) and one signal conductor wire (Signal, S) on a top of a medium layer of the CPCW, there is a signal conductor wire between the two ground conductor wires, and there is a spacing between the signal conductor wire and each of the two ground conductor wires. The three conductor wires may respectively include three metal sheets. The signal conductor wire is configured to transmit a terahertz wave signal. As shown in b in FIG. 21, a ground conductor surface in b in FIG. 21 may be made of an entire piece of metal material. In a process in which the terahertz wave signal is transmitted through the signal conductor wire, most of an electromagnetic field (electromagnetic waves) generated by the terahertz wave signal is constrained in a medium, and a part of the electromagnetic field is distributed in space. After the to-be-detected object is loaded on the CPWG, the to-be-detected object may absorb the part of the electromagnetic field distributed in space, so that the to-be-detected object may absorb, at a specific frequency, the terahertz wave signal transmitted through the CPWG, and the terahertz wave signal received by the receiving unit has an absorption peak response. In this way, an absorption spectrum of the to-be-detected object for the terahertz wave signal is determined.

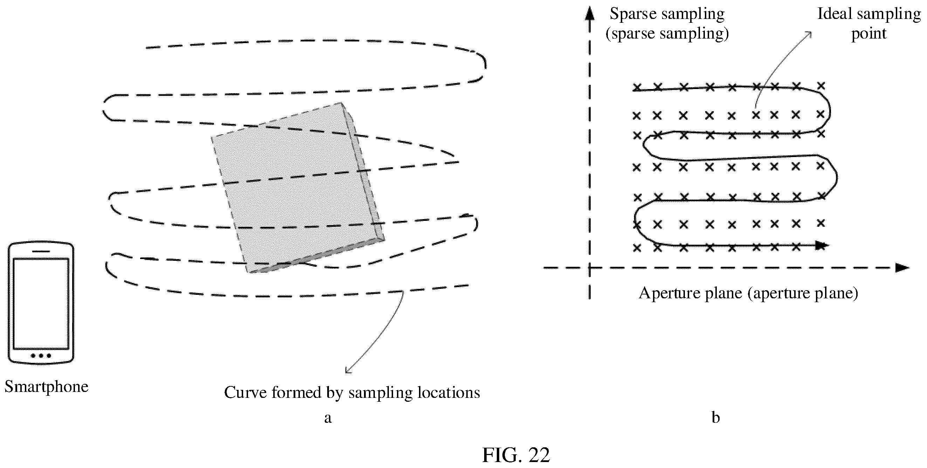

Optionally, in this embodiment of this application, in a possible implementation, in a process of sensing a physical structure form of the to-be-detected object by using the communication apparatus in the electronic device, a depth of field camera and an MEMS gyroscope on the electronic device may be used in collaboration, to implement a virtual aperture imaging function. For example, a terminal device (for example, a mobile phone) used by a user may include the communication apparatus, the depth of field camera, and the MEMS gyroscope provided in embodiments of this application. The user may move the mobile phone around the to-be-detected object, to virtualize a large antenna array, and the depth of field camera and the MEMS gyroscope on the mobile phone are collaborated to obtain a movement location of the mobile phone, so as to sense the physical structure form of the to-be-detected object. For example, as shown in FIG. 22, in a in FIG. 22, a smartphone includes the communication apparatus (not shown in the figure) provided in embodiments of this application. The user may hold the smartphone, and after enabling a sensing mode, perform sampling around the to-be-detected object, where a curve indicates a location change curve including movement locations of the mobile phone. b in FIG. 22 is a diagram of obtained sampling points. In b in FIG. 22, a curve with an arrow indicates a degree to which a movement location of the mobile phone deviates from an ideal movement location (an ideal sampling point).

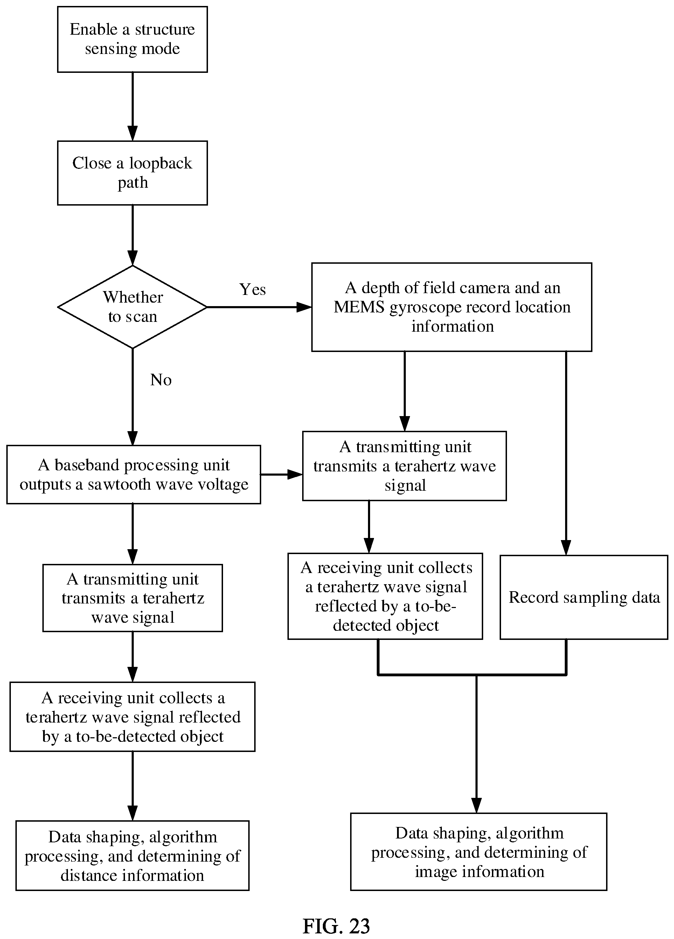

For example, FIG. 23 is a schematic flowchart illustrating sensing a physical structure form (that is, sensing a structure) of a to-be-detected object by using a smartphone. The smartphone includes the communication apparatus, the depth of field camera, and the MEMS gyroscope provided in embodiments of this application.

In some possible implementations, an "auxiliary prompt information" option control may be displayed on a display interface of the smartphone. When the smartphone detects an operation (for example, a tap operation) performed by the user on the control, multiple selection boxes or prompt boxes of "auxiliary prompt information" may be displayed on the display interface, for example, include an "enable a structure sensing mode" dialog box, and a "whether to scan" dialog box. As shown in FIG. 23, when the smartphone detects an operation (for example, a tap operation) performed by the user on an option "enable a sensing mode", the baseband processing unit may close the loopback path in the communication apparatus provided in this application on the smartphone, and displays an option "whether to scan" on the display interface. When the user selects an option "scan", the baseband processing unit may generate a sawtooth wave voltage signal, amplify the sawtooth wave voltage signal to a specific level, and feed the sawtooth wave voltage signal into the oscillation circuit in the transmitting unit through the tuning circuit in the transmitting unit. The oscillation circuit modulates the sawtooth wave voltage signal to the terahertz wave signal based on the sawtooth wave voltage signal and a frequency sweeping mode configured by the tuning circuit, transmits a first part of the terahertz wave signal on the loopback path, and transmits a second part of the terahertz wave signal to the to-be-detected object. In addition, the baseband processing unit may enable the depth of field camera and the MEMS gyroscope on the smartphone. The depth of field camera may record current relative location coordinates of the smartphone relative to the to-be-detected object, and the MEMS gyroscope may output current absolute location coordinates of the smartphone. For ease of description, the relative location coordinates and the absolute location coordinates are collectively referred to as first data. In a process in which the user moves the smartphone, the depth of field camera and the MEMS gyroscope continuously obtain the first data and feed back the first data to the baseband processing unit. The first data includes multiple pieces of first sampling data, and each piece of first sampling data corresponds to one sampling moment. The baseband processing unit may calculate, based on the first data, a current physical spatial location of the smartphone. Optionally, a "scanning prompt pattern" may be further displayed on the display interface of the smartphone. In the scanning prompt pattern, an arrow or a dot may be used to prompt the user with a degree to which a current movement location of the smartphone deviates from an ideal location, to prompt the user to adjust a scanning action or a scanning speed. In addition, the receiving unit collects the terahertz wave signal reflected by the to-be-detected object, converts into, first reflection information, the terahertz wave signal reflected by the to-be-detected object, and transmits the first reflection information to the baseband processing unit. The baseband processing unit performs sampling on the first reflection information at a first sampling frequency, to obtain multiple pieces of second sampling data, a sampling moment of each piece of second sampling data corresponds to one physical spatial location of the smartphone, and each physical spatial location is calculated based on first sampling data at a same moment. For ease of description, the multiple pieces of second sampling data are collectively referred to as second data, that is, the second data includes the multiple pieces of second sampling data. The first data and the second data may be recorded in a random access memory (random access memory, RAM) of the smartphone, that is, the sampling data is recorded.

After scanning is complete, data shaping and algorithm processing are performed, the following two aspects are mainly included.

According to a first aspect, the baseband processing unit may determine, based on the terahertz wave signal reflected by the to-be-detected object and the terahertz wave signal transmitted on the loopback path, time difference information of the received terahertz wave signals, and determine a distance between the to-be-detected object and the smartphone based on the time difference information.

According to a second aspect, the baseband processing unit may match the first data with the second data. In other words, the baseband processing unit aligns N pieces of first sampling data included in the first data with M pieces of second sampling data included in the second data, that is, the N pieces of first sampling data are aligned with the M pieces of second sampling data at sampling moments. It should be understood that, when a sampling frequency of the first data is the same as a sampling frequency of the second data, that is, N=M, the first data and the second data are naturally aligned. In this case, no alignment operation is required.

When the sampling frequencies of the first data and the second data are not equal, that is, N is not equal to M, the N pieces of first sampling data and the M pieces of second sampling data may be aligned in a linear difference or an extraction manner. For example, M-N pieces of third data are inserted into the N pieces of first sampling data, or N-M pieces of third data are inserted into the M pieces of second sampling data, and then the first data and the second data at a same sampling moment are aligned. For example, if the sampling frequency of the first data is K₁Hz, the sampling frequency of the second data is K₂Hz, and K₁=2 × K₂, N=K₁/K₂ × M. Therefore, one piece of sampling data may be extracted from the N pieces of first sampling data at an interval of K₁/K₂. In this way, the N pieces of first sampling data become M pieces of first sampling data, and a quantity of the M pieces of first sampling data is the same as a quantity of the second sampling data. Then, the first sampling data is aligned with the second data one by one (one piece of first sampling data and one piece of second sampling data). Alternatively, one piece of sampling data may be inserted into the M pieces of second sampling data at an interval of K₁/K₂, so that the M pieces of second sampling data become N pieces of second sampling data, and a quantity of the N pieces of second sampling data is the same as a quantity of the first sampling data. Then, the N pieces of second sampling data are matched with the first sampling data one by one.

Algorithm processing is performed on shaped data, to generate an electromagnetic image of the to-be-detected object, that is, image information of the to-be-detected object, so that the image information is displayed on the display interface.

An embodiment of this application further provides a signal transmission method. The method may be applied to the communication apparatus provided in embodiments of this application. For example, the structure of the communication apparatus may be shown in FIG. 6, FIG. 7, or FIG. 9. The method includes:

A baseband processing unit generates a communication signal or a sensing signal, and transmits the communication signal or the sensing signal to a transmitting unit;
when a signal generated by the baseband processing unit is a communication signal, the transmitting unit modulates the communication signal to a first frequency band wave signal, and sends the first frequency band wave signal; or
when a signal generated by the baseband processing unit is a sensing signal, the transmitting unit modulates the sensing signal to a second frequency band wave signal, transmits a first part of the second frequency band wave signal to a first to-be-detected object, and sends a second part of the second frequency band wave signal to a receiving unit through a loopback path; and the receiving unit receives the second frequency band wave signal reflected by the first to-be-detected object and the second part of the second frequency band wave signal, and transmits, to the baseband processing unit, the second frequency band wave signal reflected by the first to-be-detected object and the second part of the second frequency band wave signal, or transmits, to the baseband processing unit, a signal obtained by processing the second frequency band wave signal reflected by the first to-be-detected object and the second part of the second frequency band wave signal; and
the baseband processing unit performs distance measurement and/or physical structure form sensing on the first to-be-detected object based on at least one of the following:
   the second frequency band wave signal reflected by the first to-be-detected object and the second part of the second frequency band wave signal, or the signal obtained by processing the second frequency band wave signal reflected by the first to-be-detected object and the second part of the second frequency band wave signal.

For example, the first frequency band wave signal and the second frequency band wave signal each may be a terahertz wave signal, or a signal within another frequency band (for example).

According to the signal transmission method provided in this embodiment of this application. Communication with another communication apparatus can be implemented by using a signal (for example, a terahertz wave signal or a millimeter wave signal) within a frequency band, and a to-be-detected object can also be sensed by using a signal within the frequency band, for example, a physical structure form of the to-be-detected object, and a distance from the to-be-detected object can be determined. In other words, in a same communication apparatus, communication and sensing performed by using signals within the frequency band coexist. This improves use efficiency of the signal and the communication apparatus.

An embodiment of this application further provides another signal transmission method. The method may be applied to the communication apparatus provided in embodiments of this application. For example, the structure of the communication apparatus may be shown in FIG. 6, FIG. 7, or FIG. 12. The method includes:

A baseband processing unit generates a communication signal or a sensing signal, and transmits the communication signal or the sensing signal to a transmitting unit;
when a signal generated by the baseband processing unit is a communication signal, the transmitting unit modulates the communication signal to a first frequency band wave signal, and sends the first frequency band wave signal; or
when a signal generated by the baseband processing unit is a sensing signal, when there is no to-be-detected object placed on a loopback path, the transmitting unit modulates the sensing signal to a first signal, and sends the first signal to a receiving unit through the loopback path; when there is a to-be-detected object placed on the loopback path, the transmitting unit modulates the sensing signal to a second signal, and sends the second signal to the receiving unit through the loopback path, where the first signal and the second signal each are a second frequency band wave signal; and the receiving unit receives the first signal and the second signal that are transmitted through the loopback path, and transmits the first signal and the second signal to the baseband processing unit, or transmits, to the baseband processing unit, signals obtained through respective processing on the first signal and the second signal; and
the baseband processing unit determines a substance type of the to-be-detected object based on at least one of the following:
   the first signal and the second signal, or the signals obtained through respective processing on the first signal and the second signal.

According to the signal transmission method provided in this embodiment of this application. Communication with another communication apparatus can be implemented by using a signal (for example, a terahertz wave signal or a millimeter wave signal) within a frequency band, and a to-be-detected object can also be sensed by using a signal within the frequency band, for example, a type or a substance attribute of the to-be-detected object can be determined. In other words, in a same communication apparatus, communication and sensing performed by using signals within the frequency band coexist. This improves use efficiency of the signal and the communication apparatus.

In some possible implementations, the method further includes: The baseband processing unit determines, based on the first signal and the second signal or the signals obtained through respective processing on the first signal and the second signal, a frequency and a peak of an absorption peak of the to-be-detected object for the second signal; and determines the type of the to-be-detected object based on the frequency and the peak of the absorption peak for the second signal.

For example, the first frequency band wave signal and the second frequency band wave signal each may be a terahertz wave signal, or a signal within another frequency band (for example, a millimeter wave signal).

For example, the first frequency band wave signal may be a first terahertz wave signal, and the first terahertz wave signal may be a terahertz wave signal at a fixed frequency (a fixed frequency). For example, a frequency of the first terahertz wave signal may be a first frequency. The second frequency band wave signal may be a second terahertz wave signal, a frequency of the second terahertz wave signal may change with time, and the frequency of the second terahertz wave signal may belong to a wide frequency range.

In any possible implementation of the signal transmission method provided in this application, the transmitting unit includes a bias circuit, a tuning circuit, and an oscillation circuit, and both the bias circuit and the tuning circuit are connected to the oscillation circuit.

In any possible implementation of the signal transmission method, when the signal generated by the baseband processing unit is a communication signal, the method further includes: the tuning circuit configures a frequency of the oscillation circuit to the first frequency, where the first frequency is a frequency of the first frequency band wave signal; the bias circuit receives the communication signal, and transmits the communication signal to the oscillation circuit; and the oscillation circuit modulates the communication signal to the first frequency band wave signal, and sends the first frequency band wave signal.

In any possible implementation of the signal transmission method, when the signal generated by the baseband processing unit is a sensing signal, the method further includes: The bias circuit controls the oscillation circuit to be in an on state; the tuning circuit receives the sensing signal; and the oscillation circuit modulates the sensing signal to the second frequency band wave signal, and sends the second frequency band wave signal, where a frequency range of the second frequency band wave signal is a second frequency range.

In any possible implementation of the signal transmission method, the oscillation circuit includes a resonant tunneling diode RTD, the tuning circuit includes multiple varactor diodes connected in parallel to the RTD, and the RTD and the multiple varactor diodes modulate the sensing signal to the second frequency band wave signal.

In any possible implementation of the signal transmission method, the loopback path includes a spoof surface plasmon polariton SSPP transmission line and/or a grounded coplanar waveguide CPWG transmission line.

In any possible implementation of the signal transmission method, at least a part of the loopback path is exposed to a surface of the communication apparatus.

In any possible implementation of the signal transmission method, the receiving unit includes a Schottky diode frequency mixer and/or a wave detector.

In any possible implementation of the signal transmission method, the first frequency band wave signal is a terahertz band signal and/or the second frequency band wave signal is a terahertz band signal.

In any possible implementation of the signal transmission method, the sensing signal includes a voltage signal and/or a current signal, and the communication signal includes a baseband symbol signal.

For descriptions of various possible implementations and beneficial effects of the signal transmission method provided in embodiments of this application, refer to the descriptions of the related implementations in FIG. 6 to FIG. 23. For brevity, details are not described herein again.

It should be understood that in embodiments of this application, "first", "second", and the like are merely intended to indicate that multiple objects are different. For example, the first signal and the second signal are merely used to indicate different signals. The terms should impose no impact on the signals and the quantities thereof. "First", "second", and the like described above should not impose any limitation on embodiments of this application.

It should be further understood that division into the manners, cases, categories, and embodiments in embodiments of this application is merely intended for ease of description, and should not constitute a particular limitation. The features in the manners, categories, cases, and embodiments may be combined without contradiction.

It should be further understood that the foregoing descriptions of embodiments of this application emphasize differences between embodiments. For same or similar parts that are not mentioned, refer to these embodiments. For brevity, details are not described herein again.

It should be further understood that division of modules (units) in the communication apparatus and implementation is merely logical function division. During actual implementation, all or some of the units may be integrated into one physical entity or may be physically separated. All the modules in the communication apparatus may be implemented in a form of hardware; or some modules may be implemented in a form in which a processing element invokes software, and some modules are implemented in a form of hardware. For example, each module may be a separately disposed processing element, or may be integrated into a chip in a system or a communication apparatus for implementation.

An embodiment of this application further provides an electronic device. The electronic device may include any communication apparatus provided in the foregoing embodiments. For example, the electronic device may include the communication apparatus shown in FIG. 6, FIG. 7, FIG. 9, or FIG. 12.

For example, the electronic device may be terminal devices in various forms, for example, a smartphone, a tablet computer, a notebook computer, a foldable mobile phone, a large-screen device, a wearable device, a smart television, and a head unit. A specific form of the electronic device is not limited in embodiments of this application.

Optionally, the electronic device may further include a depth of field camera and an MEMS gyroscope.

An embodiment of this application further provides a computer-readable medium, configured to store computer program code. The computer program includes instructions used to perform any signal transmission method provided in embodiments of this application. For example, the readable medium may be a read-only memory (read-only memory, ROM) or a random access memory (random access memory, RAM). This is not limited in embodiments of this application.

This application further provides a computer program product. The computer program product includes instructions. When the instructions are executed, a communication apparatus or a network device is enabled to perform an operation of any signal transmission method provided in embodiments of this application.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a chip in the communication apparatus performs any signal transmission method provided in the foregoing embodiments of this application.

Optionally, any communication apparatus provided in embodiments of this application may include the system chip.

Optionally, the computer instructions are stored in a storage unit.

Optionally, the storage unit is a storage unit inside the chip, for example, a register or a cache. Alternatively, the storage unit may be a storage unit that is inside the terminal and that is located outside the chip, for example, a ROM, another type of static storage device that can store static information and an instruction, or a RAM. Any processor mentioned above may be a central processing unit (central processing unit, CPU), a microprocessor, an application-specific integrated circuit (application-specific integrated circuit, ASIC), or one or more integrated circuits used to control program execution of the main system information transmission method. The processing unit and the storage unit may be decoupled, are separately disposed on different physical devices, and are connected in a wired or wireless manner to implement functions of the processing unit and the storage unit, to support the system chip in implementing various functions in the foregoing embodiments. Alternatively, the processing unit and the memory may be coupled to a same device.

In the several embodiments provided in this application, it should be understood that the disclosed structures may be implemented in other manners. For example, the described communication apparatus embodiments are merely examples. For example, division of the modules (units) is merely logical function division and may be other division during actual implementation. For example, multiple modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

In an example, a unit in any one of the foregoing apparatuses may be one or more integrated circuits configured to implement the foregoing method, for example, one or more ASICs, one or more digital signal processors (digital signal processors, DSPs), one or more field programmable gate arrays (field programmable gate arrays, FPGAs), or a combination of at least two of these integrated circuit forms. For another example, when the units in the apparatus may be implemented in a form of scheduling a program by the processing element, the processing element may be a general-purpose processor, for example, a central processing unit (central processing unit, CPU) or another processor that can invoke the program. For still another example, the units may be integrated and implemented in a form of system-on-a-chip (system-on-a-chip, SOC).

It should be understood that, in embodiments of this application, the processor in embodiments of this application may be a CPU, or may be another general-purpose processor, a digital signal processor (digital signal processor, DSP), an application-specific integrated circuit (application-specific integrated circuit, ASIC), a field programmable gate array (field-programmable gate array, FPGA) or another programmable logic device, discrete gate or transistor logic device, discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terms "system" and "network" may be used interchangeably in this specification. The term "and/or" in this specification describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

In this application, names may be assigned to various objects such as messages/information/devices/network
elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

A person of ordinary skill in the art may be aware that all or some of the methods in embodiments of this application may be implemented by using software, hardware, firmware, or any combination thereof. When software is used to implement embodiments, all or a part of embodiments may be implemented in a form of computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or other programmable apparatuses. The computer programs or the instructions may be stored in the computer-readable storage medium, or may be transmitted through the computer-readable storage medium. The computer-readable storage medium may be any usable medium accessible by a computer, or a data storage device like a server integrating one or more usable media.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed communication apparatus and method may be implemented in other manners. For example, the foregoing apparatus embodiments are merely examples. For example, division of the units is merely logical function division and may be other division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions in this application essentially, or the part contributing to the related technology, or a part of the technical solutions may be implemented in a form of software product. The computer software product is stored in a storage medium and includes several instructions for instructing a computer device (for example, a network device) to perform all or a part of the steps of the methods in embodiments of this application. The storage medium includes a USB flash drive, a removable hard disk, a read-only memory (read-only memory, ROM), or random access.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication apparatus, wherein the communication apparatus comprises a baseband processing unit, a transmitting unit, a receiving unit, and a loopback path;
the baseband processing unit is configured to: generate a communication signal or a sensing signal, and transmit the communication signal or the sensing signal to the transmitting unit;
when a signal generated by the baseband processing unit is a communication signal, the transmitting unit is configured to: modulate the communication signal to a first frequency band wave signal, and send the first frequency band wave signal; or
when a signal generated by the baseband processing unit is a sensing signal, the transmitting unit is configured to: modulate the sensing signal to a second frequency band wave signal, transmit a first part of the second frequency band wave signal to a first to-be-detected object, and send a second part of the second frequency band wave signal to the receiving unit through the loopback path; and the receiving unit is configured to: receive the second frequency band wave signal reflected by the first to-be-detected object and the second part of the second frequency band wave signal, and transmit, to the baseband processing unit, the second frequency band wave signal reflected by the first to-be-detected object and the second part of the second frequency band wave signal, or transmit, to the baseband processing unit, a signal obtained by processing the second frequency band wave signal reflected by the first to-be-detected object and the second part of the second frequency band wave signal; and
the baseband processing unit is further configured to perform distance measurement and/or physical structure form sensing on the first to-be-detected object based on at least one of the following:
the second frequency band wave signal reflected by the first to-be-detected object and the second part of the second frequency band wave signal, or the signal obtained by processing the second frequency band wave signal reflected by the first to-be-detected object and the second part of the second frequency band wave signal.

2. The communication apparatus according to claim 1, wherein the transmitting unit comprises a bias circuit, a tuning circuit, and an oscillation circuit, and both the bias circuit and the tuning circuit are connected to the oscillation circuit.

3. The communication apparatus according to claim 2, wherein when the signal generated by the baseband processing unit is a communication signal,
the tuning circuit is configured to configure a frequency of the oscillation circuit to a first frequency, wherein the first frequency is a frequency of the first frequency band wave signal;
the bias circuit is configured to: receive the communication signal, and transmit the communication signal to the oscillation circuit; and
the oscillation circuit is configured to: modulate the communication signal to the first frequency band wave signal, and send the first frequency band wave signal.

4. The communication apparatus according to claim 2, wherein when the signal generated by the baseband processing unit is a sensing signal,
the bias circuit is configured to control the oscillation circuit to be in an on state;
the tuning circuit is configured to receive the sensing signal; and
the oscillation circuit is configured to: modulate the sensing signal to the second frequency band wave signal, and send the second frequency band wave signal, wherein a frequency range of the second frequency band wave signal is a second frequency range.

5. The communication apparatus according to any one of claims 2 to 4, wherein the oscillation circuit comprises a resonant tunneling diode RTD, the tuning circuit comprises multiple varactor diodes connected in parallel to the RTD, and the RTD and the multiple varactor diodes are configured to modulate the sensing signal to the second frequency band wave signal.

6. The communication apparatus according to any one of claims 1 to 5, wherein the loopback path comprises a spoof surface plasmon polariton SSPP transmission line and/or a grounded coplanar waveguide CPWG transmission line.

7. The communication apparatus according to any one of claims 1 to 6, wherein at least a part of the loopback path is exposed to a surface of the communication apparatus.

8. The communication apparatus according to any one of claims 1 to 7, wherein the receiving unit comprises a Schottky diode frequency mixer and/or a wave detector.

9. The communication apparatus according to any one of claims 1 to 8, wherein the first frequency band wave signal is a terahertz band signal and/or the second frequency band wave signal is a terahertz band signal.

10. The communication apparatus according to any one of claims 1 to 9, wherein the sensing signal comprises a voltage signal and/or a current signal, and the communication signal comprises a baseband symbol signal.

11. A communication apparatus, wherein the communication apparatus comprises a baseband processing unit, a transmitting unit, a receiving unit, and a loopback path;
the baseband processing unit is configured to: generate a communication signal or a sensing signal, and transmit the communication signal or the sensing signal to the transmitting unit;
when a signal generated by the baseband processing unit is a communication signal, the transmitting unit is configured to: modulate the communication signal to a first frequency band wave signal, and send the first frequency band wave signal; or
when a signal generated by the baseband processing unit is a sensing signal, the transmitting unit is configured to: when there is no to-be-detected object placed on the loopback path, modulate the sensing signal to a first signal, and send the first signal to the receiving unit through the loopback path; and is further configured to: when there is a to-be-detected object placed on the loopback path, modulate the sensing signal to a second signal, and send the second signal to the receiving unit through the loopback path, wherein the first signal and the second signal each are a second frequency band wave signal; and the receiving unit is configured to: receive the first signal and the second signal that are transmitted through the loopback path, and transmit the first signal and the second signal to the baseband processing unit, or transmit, to the baseband processing unit, signals obtained through respective processing on the first signal and the second signal; and
the baseband processing unit is further configured to determine a substance type of the to-be-detected object based on at least one of the following:
the first signal and the second signal, or the signals obtained through respective processing on the first signal and the second signal.

12. The communication apparatus according to claim 11, wherein the baseband processing unit is further configured to:
determine, based on the first signal and the second signal or the signals obtained through respective processing on the first signal and the second signal, a frequency and a peak of an absorption peak of the to-be-detected object for the second signal; and
determine the type of the to-be-detected object based on the frequency and the peak of the absorption peak for the second signal.

13. The communication apparatus according to claim 11 or 12, wherein the transmitting unit comprises a bias circuit, a tuning circuit, and an oscillation circuit, and both the bias circuit and the tuning circuit are connected to the oscillation circuit.

14. The communication apparatus according to claim 13, wherein when the signal generated by the baseband processing unit is a communication signal,
the tuning circuit is configured to configure a frequency of the oscillation circuit to a first frequency, wherein the first frequency is a frequency of the first frequency band wave signal;
the bias circuit is configured to: receive the communication signal, and transmit the communication signal to the oscillation circuit; and
the oscillation circuit is configured to: modulate the communication signal to the first frequency band wave signal, and send the first frequency band wave signal.

15. The communication apparatus according to claim 13, wherein when the signal generated by the baseband processing unit is a sensing signal,
the bias circuit is configured to control the oscillation circuit to be in an on state;
the tuning circuit is configured to receive the sensing signal; and
the oscillation circuit is configured to: modulate the sensing signal to the second frequency band wave signal, and send the second frequency band wave signal, wherein a frequency range of the second frequency band wave signal is a second frequency range.

16. The communication apparatus according to any one of claims 13 to 15, wherein the oscillation circuit comprises a resonant tunneling diode RTD, the tuning circuit comprises multiple varactor diodes connected in parallel to the RTD, and the RTD and the multiple varactor diodes are configured to modulate the sensing signal to the second frequency band wave signal.

17. The communication apparatus according to any one of claims 11 to 16, wherein the loopback path comprises a spoof surface plasmon polariton SSPP transmission line and/or a grounded coplanar waveguide CPWG transmission line.

18. The communication apparatus according to any one of claims 11 to 17, wherein at least a part of the loopback path is exposed to a surface of the communication apparatus.

19. The communication apparatus according to any one of claims 11 to 18, wherein the receiving unit comprises a Schottky diode frequency mixer and/or a wave detector.

20. The communication apparatus according to any one of claims 11 to 19, wherein the first frequency band wave signal is a terahertz band signal and/or the second frequency band wave signal is a terahertz band signal.

21. The communication apparatus according to any one of claims 11 to 20, wherein the sensing signal comprises a voltage signal and/or a current signal, and the communication signal comprises a baseband symbol signal.

22. A signal transmission method, wherein the method comprises:
generating, by a baseband processing unit, a communication signal or a sensing signal, and transmitting the communication signal or the sensing signal to a transmitting unit;
when a signal generated by the baseband processing unit is a communication signal, modulating, by the transmitting unit, the communication signal to a first frequency band wave signal, and sending the first frequency band wave signal; or
when a signal generated by the baseband processing unit is a sensing signal, modulating, by the transmitting unit, the sensing signal to a second frequency band wave signal, transmitting a first part of the second frequency band wave signal to a first to-be-detected object, and sending a second part of the second frequency band wave signal to a receiving unit through a loopback path; and receiving, by the receiving unit, the second frequency band wave signal reflected by the first to-be-detected object and the second part of the second frequency band wave signal, and transmitting, to the baseband processing unit, the second frequency band wave signal reflected by the first to-be-detected object and the second part of the second frequency band wave signal, or transmitting, to the baseband processing unit, a signal obtained by processing the second frequency band wave signal reflected by the first to-be-detected object and the second part of the second frequency band wave signal; and
performing, by the baseband processing unit, distance measurement and/or physical structure form sensing on the first to-be-detected object based on at least one of the following:
the second frequency band wave signal reflected by the first to-be-detected object and the second part of the second frequency band wave signal, or the signal obtained by processing the second frequency band wave signal reflected by the first to-be-detected object and the second part of the second frequency band wave signal.

23. The method according to claim 22, wherein the transmitting unit comprises a bias circuit, a tuning circuit, and an oscillation circuit, and both the bias circuit and the tuning circuit are connected to the oscillation circuit.

24. The method according to claim 23, wherein when the signal generated by the baseband processing unit is a communication signal, the method further comprises:
configuring, by the tuning circuit, a frequency of the oscillation circuit to a first frequency, wherein the first frequency is a frequency of the first frequency band wave signal;
receiving, by the bias circuit, the communication signal, and transmitting the communication signal to the oscillation circuit; and
modulating, by the oscillation circuit, the communication signal to the first frequency band wave signal, and sending the first frequency band wave signal.

25. The method according to claim 23, wherein when the signal generated by the baseband processing unit is a sensing signal, the method further comprises:
controlling, by the bias circuit, the oscillation circuit to be in an on state;
receiving, by the tuning circuit, the sensing signal; and
modulating, by the oscillation circuit, the sensing signal to the second frequency band wave signal, and sending the second frequency band wave signal, wherein a frequency range of the second frequency band wave signal is a second frequency range.

26. The method according to any one of claims 23 to 25, wherein the oscillation circuit comprises a resonant tunneling diode RTD, the tuning circuit comprises multiple varactor diodes connected in parallel to the RTD, and the RTD and the multiple varactor diodes modulate the sensing signal to the second frequency band wave signal.

27. The method according to any one of claims 22 to 26, wherein the loopback path comprises a spoof surface plasmon polariton SSPP transmission line and/or a grounded coplanar waveguide CPWG transmission line.

28. The method according to any one of claims 22 to 27, wherein at least a part of the loopback path is exposed to a surface of a communication apparatus.

29. The method according to any one of claims 22 to 28, wherein the receiving unit comprises a Schottky diode frequency mixer and/or a wave detector.

30. The method according to any one of claims 22 to 29, wherein the first frequency band wave signal is a terahertz band signal and/or the second frequency band wave signal is a terahertz band signal.

31. The method according to any one of claims 22 to 30, wherein the sensing signal comprises a voltage signal and/or a current signal, and the communication signal comprises a baseband symbol signal.

32. A signal transmission method, wherein the method comprises:
generating, by a baseband processing unit, a communication signal or a sensing signal, and transmitting the communication signal or the sensing signal to a transmitting unit;
when a signal generated by the baseband processing unit is a communication signal, modulating, by the transmitting unit, the communication signal to a first frequency band wave signal, and sending the first frequency band wave signal; or
when a signal generated by the baseband processing unit is a sensing signal, modulating, by the transmitting unit, when there is no to-be-detected object placed on a loopback path, the sensing signal to a first signal, and sending the first signal to a receiving unit through the loopback path; modulating, by the transmitting unit, when there is a to-be-detected object placed on the loopback path, the sensing signal to a second signal, and sending the second signal to the receiving unit through the loopback path, wherein the first signal and the second signal each are a second frequency band wave signal; and receiving, by the receiving unit, the first signal and the second signal that are transmitted through the loopback path, and transmitting the first signal and the second signal to the baseband processing unit, or transmitting, to the baseband processing unit, signals obtained through respective processing on the first signal and the second signal; and
determining, by the baseband processing unit, a substance type of the to-be-detected object based on at least one of the following:
the first signal and the second signal, or the signals obtained through respective processing on the first signal and the second signal.

33. The method according to claim 32, wherein the method further comprises:
determining, by the baseband processing unit based on the first signal and the second signal or the signals obtained through respective processing on the first signal and the second signal, a frequency and a peak of an absorption peak of the to-be-detected object for the second signal; and
determining, by the baseband processing unit, the type of the to-be-detected object based on the frequency and the peak of the absorption peak for the second signal.

34. The method according to claim 32 or 33, wherein the transmitting unit comprises a bias circuit, a tuning circuit, and an oscillation circuit, and both the bias circuit and the tuning circuit are connected to the oscillation circuit.

35. The method according to claim 34, wherein when the signal generated by the baseband processing unit is a communication signal, the method further comprises:
configuring, by the tuning circuit, a frequency of the oscillation circuit to a first frequency, wherein the first frequency is a frequency of the first frequency band wave signal;
receiving, by the bias circuit, the communication signal, and transmitting the communication signal to the oscillation circuit; and
modulating, by the oscillation circuit, the communication signal to the first frequency band wave signal, and sending the first frequency band wave signal.

36. The method according to claim 34, wherein when the signal generated by the baseband processing unit is a sensing signal, the method further comprises:
controlling, by the bias circuit, the oscillation circuit to be in an on state;
receiving, by the tuning circuit, the sensing signal; and
modulating, by the oscillation circuit, the sensing signal to the second frequency band wave signal, and sending the second frequency band wave signal, wherein a frequency range of the second frequency band wave signal is a second frequency range.

37. The method according to any one of claims 34 to 36, wherein the oscillation circuit comprises a resonant tunneling diode RTD, the tuning circuit comprises multiple varactor diodes connected in parallel to the RTD, and the RTD and the multiple varactor diodes modulate the sensing signal to the second frequency band wave signal.

38. The method according to any one of claims 32 to 37, wherein the loopback path comprises a spoof surface plasmon polariton SSPP transmission line and/or a grounded coplanar waveguide CPWG transmission line.

39. The method according to any one of claims 32 to 38, wherein at least a part of the loopback path is exposed to a surface of a communication apparatus.

40. The method according to any one of claims 32 to 39, wherein the receiving unit comprises a Schottky diode frequency mixer and/or a wave detector.

41. The method according to any one of claims 32 to 40, wherein the first frequency band wave signal is a terahertz band signal and/or the second frequency band wave signal is a terahertz band signal.

42. The method according to any one of claims 32 to 41, wherein the sensing signal comprises a voltage signal and/or a current signal, and the communication signal comprises a baseband symbol signal.

43. An electronic device, wherein the electronic device comprises the communication apparatus according to any one of claims 1 to 10 or the communication apparatus according to any one of claims 11 to 21.

44. A computer-readable storage medium, wherein the computer-readable storage medium stores a computer program, the computer program comprises program instructions, and when the program instructions are executed by a processor, the processor is enabled to perform the method according to any one of claims 22 to 31 or the method according to any one of claims 32 to 42.

45. A computer program product, wherein the computer program product comprises instructions used to perform the method according to any one of claims 22 to 31 or instructions used to perform the method according to any one of claims 32 to 42.

46. A chip, comprising a processor, configured to: invoke a computer program from a memory and run the computer program, so that a communication device to which the chip is mounted performs the method according to any one of claims 22 to 31 or the method according to any one of claims 32 to 42.
